# EUROPEAN PATENT APPLICATION

(11) **EP 4 439 138 A1**
(43) Date of publication of application: **02.10.2024**
(21) Application number: 23208684.3
(22) Date of filing: 09.11.2023
(51) Int. Cl.: G02B 6/12, G02B 6/42

(54) **TECHNOLOGIES FOR A MICROLENS DESIGN WITH DIFFERENT LIGHT EMITTING ANGLES**

(30) Priority: 31.03.2023 US 202318194147
(71) Applicant: INTEL Corporation, Santa Clara, CA 95054 (US)
(72) Inventor: Chiu, Chia-Pin, Tempe, 85284 (US); Hosseini, Kaveh, Livermore, 94550 (US); Li, Xiaoqian, Chandler, 85248 (US)
(74) Representative: Goddar, Heinz J.

(57) **Abstract**

Technologies for optical coupling to photonic integrated circuit (PIC) dies are disclosed. In one illustrative embodiment, a PIC die has one or more waveguides. A lens array is positioned adjacent the PIC die. Light from waveguides of the PIC die reflects off of a reflective surface of the lens array. The reflective surface directs the light from the PIC die towards lenses in the lens array. The lenses collimate the light, facilitating coupling of light to and from other components. The reflective surface on the lens array may be oriented at any suitable angle, resulting in a collimated beam of light that is oriented at any suitable angle.

## Description

### GOVERNMENT INTEREST

This invention was made with Government support under Agreement No. HR00111830002 awarded by the United States Department of Defense. The Government has certain rights in the invention.

### BACKGROUND

Photonic integrated circuits (PICs) can be used for several applications, such as communications. Efficiently and cheaply aligning optics to couple light into and out of PICs can be a challenge. Approaches include using V-grooves to align a fiber connector or fabricating a lens attached to the PIC. However, these approaches can be expensive and/or inflexible.

### BRIEF DESCRIPTION OF THE DRAWINGS

FIG. 1 is an isometric view of a system including a photonic integrated circuit die and a lens array.
FIG. 2 is a top-down view of the system of FIG. 1.
FIG. 3 is a cross-sectional view of the system of FIG. 1.
FIG. 4 is a cross-sectional view of the system of FIG 1.
FIG. 5 is a cross-sectional view of one embodiment of a system including a photonic integrated circuit die and a lens array.
FIG. 6 is a cross-sectional view of one embodiment of a system including a photonic integrated circuit die and a lens array.
FIG. 7 is a cross-sectional view of one embodiment of a system including a photonic integrated circuit die and a lens array.
FIG. 8 is a cross-sectional view of one embodiment of a system including a photonic integrated circuit die and a lens array.
FIG. 9 is a cross-sectional view of one embodiment of a system including a photonic integrated circuit die and a lens array.
FIG. 10 is a cross-sectional view of one embodiment of a system including a photonic integrated circuit die and a lens array.
FIG. 11 is a cross-sectional view of one embodiment of a system including a photonic integrated circuit die and a lens array.
FIG. 12 is a cross-sectional view of one embodiment of a system including a photonic integrated circuit die and a lens array.
FIG. 13 is a cross-sectional view of one embodiment of a system including a photonic integrated circuit die and a lens array.
FIG. 14 is a cross-sectional view of one embodiment of a system including a photonic integrated circuit die and a lens array.

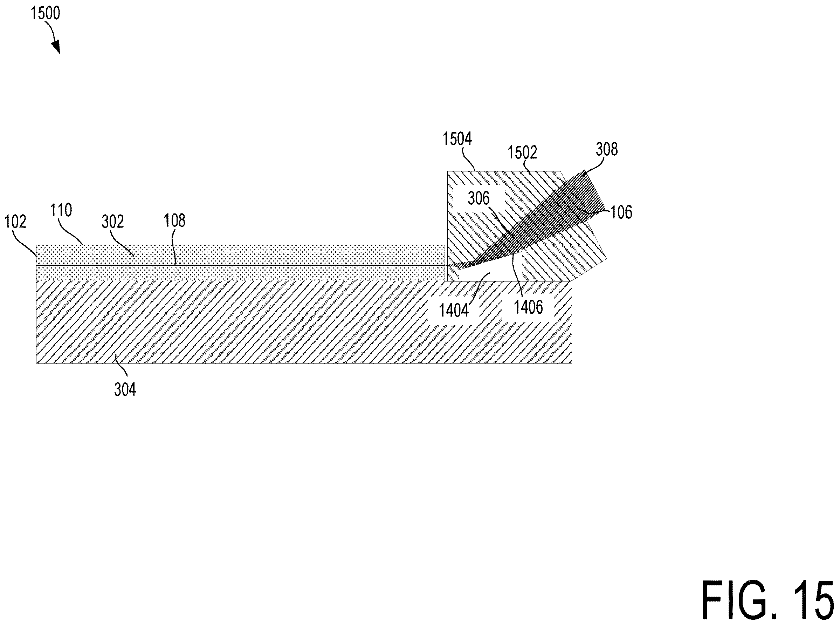

FIG. 15 is a cross-sectional view of one embodiment of a system including a photonic integrated circuit die and a lens array.
FIG. 16 is a cross-sectional view of one embodiment of a system including a photonic integrated circuit die and a lens array.
FIG. 17 is a cross-sectional view of one embodiment of a system including a photonic integrated circuit die and a lens array.
FIG. 18 is a cross-sectional view of one embodiment of a system including a photonic integrated circuit die and a lens array.
FIG. 19 is a cross-sectional view of a system including a photonic integrated circuit mated with a circuit board.
FIG. 20 is a simplified flow diagram of at least one embodiment of a method for manufacturing a photonic integrated circuit with a lens array.
FIG. 21 is a top view of a wafer and dies that may be included in a microelectronic assembly, in accordance with any of the embodiments disclosed herein.
FIG. 22 is a cross-sectional side view of an integrated circuit device that may be included in a microelectronic assembly, in accordance with any of the embodiments disclosed herein.
FIGS. 23A-23D are perspective views of example planar, gate-all-around, and stacked gate-all-around transistors.
FIG. 24 is a cross-sectional side view of an integrated circuit device assembly that may include a microelectronic assembly, in accordance with any of the embodiments disclosed herein.
FIG. 25 is a block diagram of an example electrical device that may include a microelectronic assembly, in accordance with any of the embodiments disclosed herein.

### DETAILED DESCRIPTION

In various embodiments disclosed herein, a system includes a lens array that is secured to a photonic integrated circuit (PIC) die to facilitate coupling into and out of waveguides of the PIC die. In one illustrative embodiment, the lens array includes a reflective surface to reflect light from the PIC die in a different direction, allowing flexibility in the orientation of beams from the PIC die.

As used herein, the phrase "communicatively coupled" refers to the ability of a component to send a signal to or receive a signal from another component. The signal can be any type of signal, such as an input signal, an output signal, or a power signal. A component can send or receive a signal to another component to which it is communicatively coupled via a wired or wireless communication medium (e.g., conductive traces, conductive contacts, air). Examples of components that are communicatively coupled include integrated circuit dies located in the same package that communicate via an embedded bridge in a package substrate and an integrated circuit component attached to a printed circuit board that send signals to or receives signals from other integrated circuit components or electronic devices attached to the printed circuit board.

In the following description, specific details are set forth, but embodiments of the technologies described herein may be practiced without these specific details. Well-known circuits, structures, and techniques have not been shown in detail to avoid obscuring an understanding of this description. Phrases such as "an embodiment," "various embodiments," "some embodiments," and the like may include features, structures, or characteristics, but not every embodiment necessarily includes the particular features, structures, or characteristics.

Some embodiments may have some, all, or none of the features described for other embodiments. "First," "second," "third," and the like describe a common object and indicate different instances of like objects being referred to. Such adjectives do not imply objects so described must be in a given sequence, either temporally or spatially, in ranking, or any other manner. "Connected" may indicate elements are in direct physical or electrical contact, and "coupled" may indicate elements co-operate or interact, but they may or may not be in direct physical or electrical contact. Furthermore, the terms "comprising," "including," "having," and the like, as used with respect to embodiments of the present disclosure, are synonymous. Terms modified by the word "substantially" include arrangements, orientations, spacings, or positions that vary slightly from the meaning of the unmodified term. For example, the central axis of a magnetic plug that is substantially coaxially aligned with a through hole may be misaligned from a central axis of the through hole by several degrees. In another example, a substrate assembly feature, such as a through width, that is described as having substantially a listed dimension can vary within a few percent of the listed dimension.

It will be understood that in the examples shown and described further below, the figures may not be drawn to scale and may not include all possible layers and/or circuit components. In addition, it will be understood that although certain figures illustrate transistor designs with source/drain regions, electrodes, etc. having orthogonal (e.g., perpendicular) boundaries, embodiments herein may implement such boundaries in a substantially orthogonal manner (e.g., within +/- 5 or 10 degrees of orthogonality) due to fabrication methods used to create such devices or for other reasons.

Reference is now made to the drawings, which are not necessarily drawn to scale, wherein similar or same numbers may be used to designate the same or similar parts in different figures. The use of similar or same numbers in different figures does not mean all figures including similar or same numbers constitute a single or same embodiment. Like numerals having different letter suffixes may represent different instances of similar components. The drawings illustrate generally, by way of example, but not by way of limitation, various embodiments discussed in the present document.

In the following description, for purposes of explanation, numerous specific details are set forth in order to provide a thorough understanding thereof. It may be evident, however, that the novel embodiments can be practiced without these specific details. In other instances, well-known structures and devices are shown in block diagram form in order to facilitate a description thereof. The intention is to cover all modifications, equivalents, and alternatives within the scope of the claims.

As used herein, the phrase "located on" in the context of a first layer or component located on a second layer or component refers to the first layer or component being directly physically attached to the second part or component (no layers or components between the first and second layers or components) or physically attached to the second layer or component with one or more intervening layers or components.

As used herein, the term "adjacent" refers to layers or components that are in physical contact with each other. That is, there is no layer or component between the stated adjacent layers or components. For example, a layer X that is adjacent to a layer Y refers to a layer that is in physical contact with layer Y.

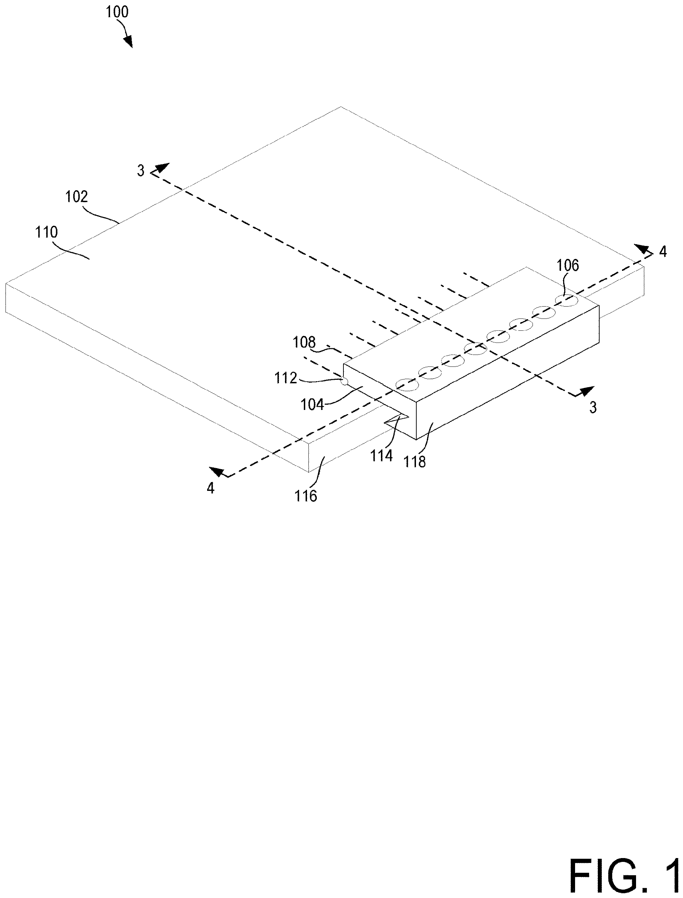

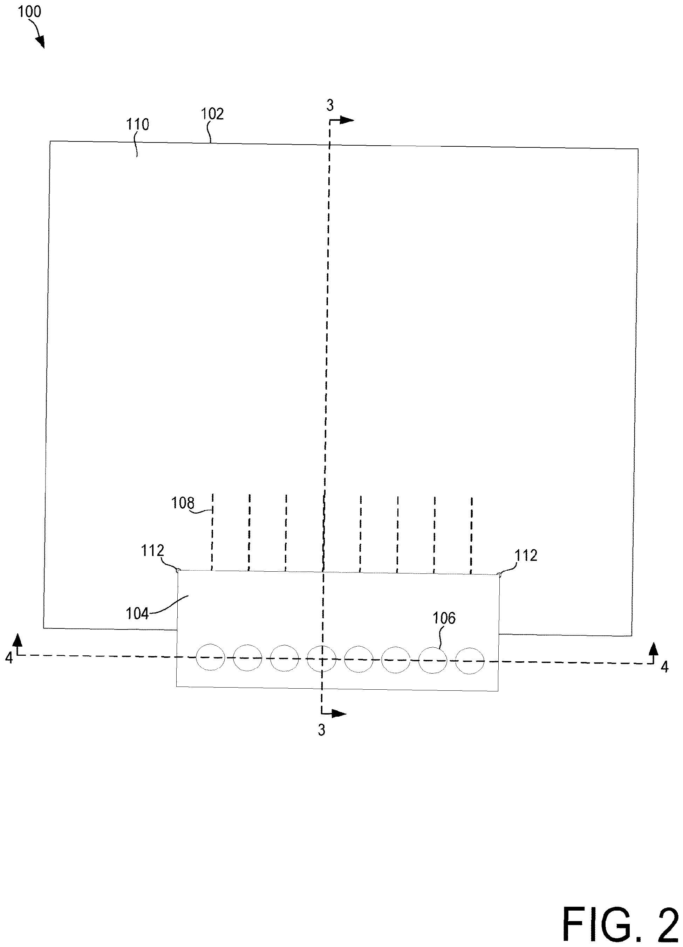

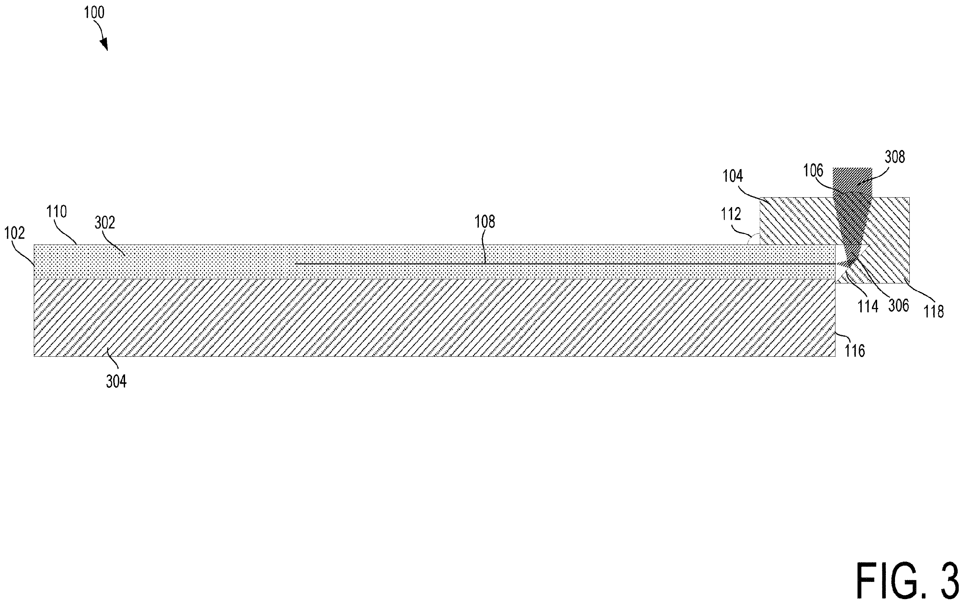

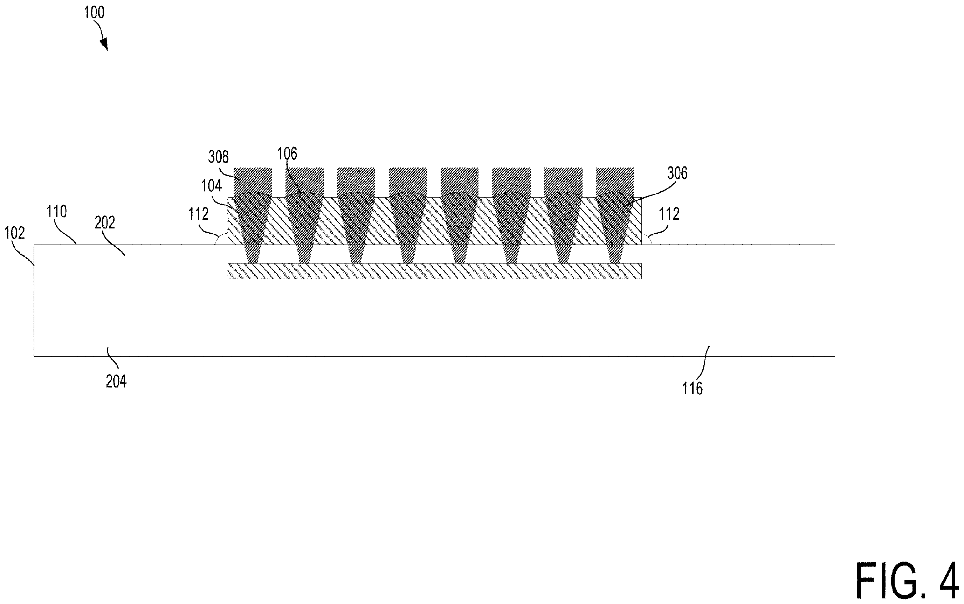

Referring now to FIGS. 1-4, in one embodiment, a system 100 includes a photonic integrated circuit (PIC) die 102 and a lens array 104 on a top surface 110 of the PIC die 102. FIG. 1 shows an isometric view of the system 100, FIG. 2 shows a top-down view of the system 100, and FIGS. 3 and 4 each show a cross-sectional view of the system 100. The illustrative PIC die 102 is configured to generate, detect, and/or manipulate light. One or more waveguides 108 are defined in the PIC die 102 to guide light. The waveguides 108 extend to a side surface 116 of the PIC die 102. Light from the waveguides 108 exits the PIC die 102 and forms expanding beams 306, as shown in FIGS. 3 and 4.

It should be appreciated that, as used herein, the "top surface" 110 refers to an outer surface of the PIC die 102 (or other PIC dies disclosed herein) and may, in some embodiments, be, e.g., a bottom surface or side surface of the PIC die 102, depending on the orientation of the PIC die 102. The illustrative PIC die 102 is much thinner in one dimension than the other two, and the top surface 110 refers to a surface extending along the two larger dimensions of the PIC die 102. Similarly, a "side surface" 116 of the PIC die 102 (or other PIC dies disclosed herein) refers to a surface of the PIC die 102 other than the top surface 110 and may not be on the "side" of the PIC die 102, depending on the orientation of the PIC die 102. Unless noted otherwise, a side surface 116 of the PIC die 102 is at an angle relative to the top surface 110, such as an angle of 90°.

A lens array 104 is positioned on the top surface 110 of the PIC die 102, with part of the lens array 104 extending past the side surface 116. Epoxy 112 secures the lens array 104 to the PIC die 102. Part of the lens array 104, which may be referred to as a reflective component 118, extends below a place defined by the top surface 110. The reflective component 118 includes a reflective surface 114. The lens array 104 includes an array of lenses 106. Each lens 106 is aligned with one of the waveguides 108. In the illustrative embodiment, in use, each waveguide 108 emits light as an expanding beam 306. Each expanding beam 306 reflects off of the reflective surface 114 towards one of the lenses 106. Each expanding beam 306 is collimated by a lens 106 into a collimated beam 308. It should be appreciated that the system can operate in the reverse direction, with an incoming collimated beam 308 focused by a lens 106 into a waveguide 108.

The PIC die 102 and lens array 104 may be integrated into any suitable component with an optical interface, such as a network interface controller, a router, a switch, a processor, a system-on-a-chip, a system-in-a-package, a memory device, etc. The optical beams 308 may be used to optically transmit and/or receive data to and/or from another device or to and/or from another component within the same device. The optical beams 308 may transmit light through free space or an optical connector or optical plug may interface with the system 100. For example, in some embodiments, the system 100 may include an optical connector fixed in place relative to the lens array 104, and a corresponding optical plug can simply be plugged into the optical connector. Such an optical plug may include another array of lenses and an array optical fibers into which the beams 308 can be coupled. The orientation of any such optical plug corresponds to the direction of the collimated beams 308, which in turn is controlled by the orientation of the reflective surface 114. As discussed in more detail below, the reflective surface 114 may be oriented in different directions, allowing for flexibility in the orientation of the beams 308 and any corresponding optical plugs relative to the PIC die 102.

In the illustrative embodiment and as discussed in more detail below, the lens array 104 is positioned on the surface of the PIC die 102 using a pick-and-place machine. The PIC die 102 may include one or more fiducials and the lens array 104 may include one or more fiducials, which may be used by a pick-and-place machine to place the lens array 104. The fiducials may be embodied as, e.g., a dot, a line, or other structure that indicates a location of a particular part of the PIC die 102. Any PIC die and/or optical connector interface disclosed herein may have any suitable fiducials. The pick-and-place machine can align the lenses 106 of the lens array 104 with a high precision, such as a misalignment of less than 3-0.3 micrometers at 3 sigma. In the illustrative embodiment, the misalignment of the placement of the lens array 104 is less than the minimum waist of the collimated beams 308.

It should be appreciated that, with the lens 106 positioned relative to the waveguides 108 with high precision, a component coupling to the beams 308 does not need to be positioned relative to the lenses 106 with high precision in order to have good coupling of light. As such, coupling of light from the waveguide 108 is relatively insensitive to the positional alignment of a lens array 104 relative to the lens array 104. For example, for an uncollimated beam (i.e., a beam coming out of a waveguide 108 without any lens 106), coupling loss may be 3 dB for a misalignment of 4.5 micrometers, while for a collimated beam with a 25 micrometer mode field diameter, coupling loss may be 3 dB for a misalignment of 20 micrometers.

The PIC die 102 may include one or more lasers or other light sources, detectors, amplitude and/or phase modulators, filters, splitters, amplifiers, etc. In one embodiment, the PIC die 102 may receive electrical signals, such as from another component (e.g., an electrical integrated circuit or EIC) that the PIC die 102 is mounted on. The PIC die 102 may generate a corresponding optical signal in a waveguide 108 to be sent to a remote device. Additionally or alternatively, the PIC die 102 may receive optical signals in a waveguide 108 and generate a corresponding electrical signal, which may be sent to another component on the PIC die 102. The PIC die 102 may operate at any suitable optical wavelength, such as 1,200-1,800 nanometers. In some embodiments, the PIC die 102 may operate at a higher or lower wavelength, such as ultraviolet, visible, near infrared, far infrared, etc. In the illustrative embodiment, the PIC die 102 operates in the near infrared at a wavelength that is transparent in silicon.

In the illustrative embodiment, the PIC die 102 has an oxide layer 302 on a substrate layer 304 (see, e.g., FIG. 3). In the illustrative embodiment, the waveguides 108 are defined in the oxide layer 302. The illustrative waveguides 108 are silicon waveguides in a silicon oxide layer 302. The higher index of refraction of the silicon relative to the silicon dioxide confines the light to the waveguides 108. In other embodiments, the waveguides 108 may be made from a different material and/or may be defined in a different material. Each waveguide 108 may have any suitable dimensions, such as a width and/or height of 0.1-10 micrometers. In the illustrative embodiment, each waveguide 108 is square. In other embodiments, the waveguide 108 may have a different shape, such as a rectangular shape. The PIC die 102 may include any suitable number of waveguides 108 coupling to the lens array 104, such as 1-32 waveguides 108. Of course, the PIC die 102 may include additional waveguides internally.

The waveguides 108 may be separated by any suitable distance, such as 50-1,000 micrometers. The waveguides 108 are spaced apart enough that the beams 306 projected from the side surface 116 do not overlap once collimated by the lenses 106. Each waveguide 108 may support one or more channels, such as 1-50 channels. Each channel may have any suitable bandwidth, such as 0.1-1,000 gigabits per second.

In the illustrative embodiment, the lenses 106 have spherical optical surfaces. In other embodiments, the lenses 106 may have aspherical surfaces that may correct for aberrations such as spherical aberration. The lenses 106 may have any suitable spacing between them, such as 50-1,000 micrometers, measured from the center of one lens 106 to the next lens 106. The lenses 106 may have any suitable focal length, such as 1-25 millimeters. The lenses 106 may collimate light from the waveguides 108 to a beam with any suitable mode field diameters, such as 20-1,000 micrometers. In some embodiments, the lens array 104 may include an optical focusing element other than a lens, such as a reflective mirror or a hologram.

The lens array 104 may be made from any suitable transmissive material, such as glass, plastic, fused silica, silicon, etc. The lens array 104 may be made in any suitable manner, such as molding, machining, etching, 3D printing, laser direct writing, etc.

In some embodiments, some or all of the optical surfaces (such as the lens 106, the side surface 116, etc.) may have anti-reflection or other impedance-matching coatings in order to reduce reflections. Similar coatings may be applied to any suitable optical surface in any embodiment disclosed herein. The reflective surface 114 may be any suitable type of reflective surface, such as a metal reflective coating, an interference coating, a reflective surface based on total internal reflection, etc.

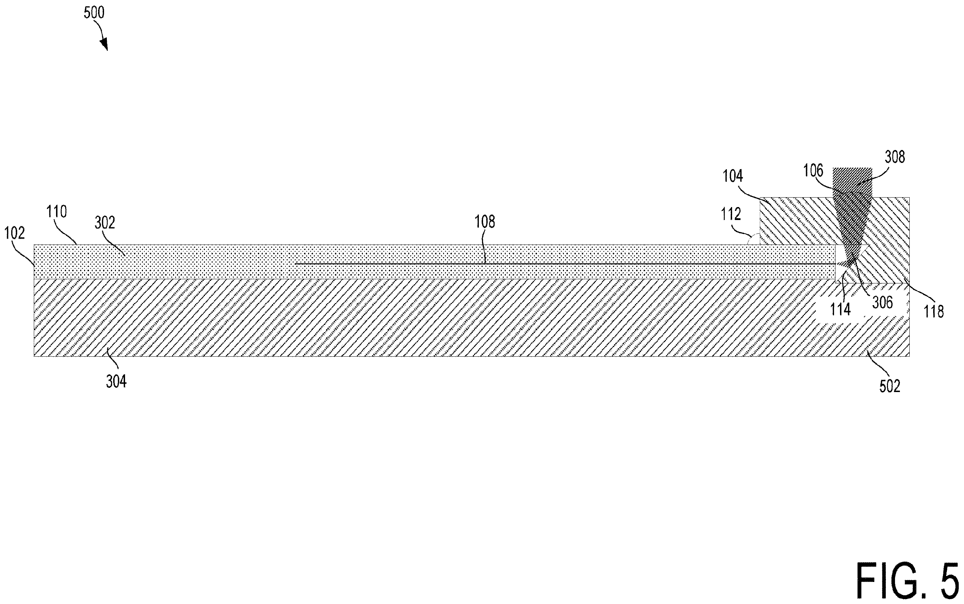

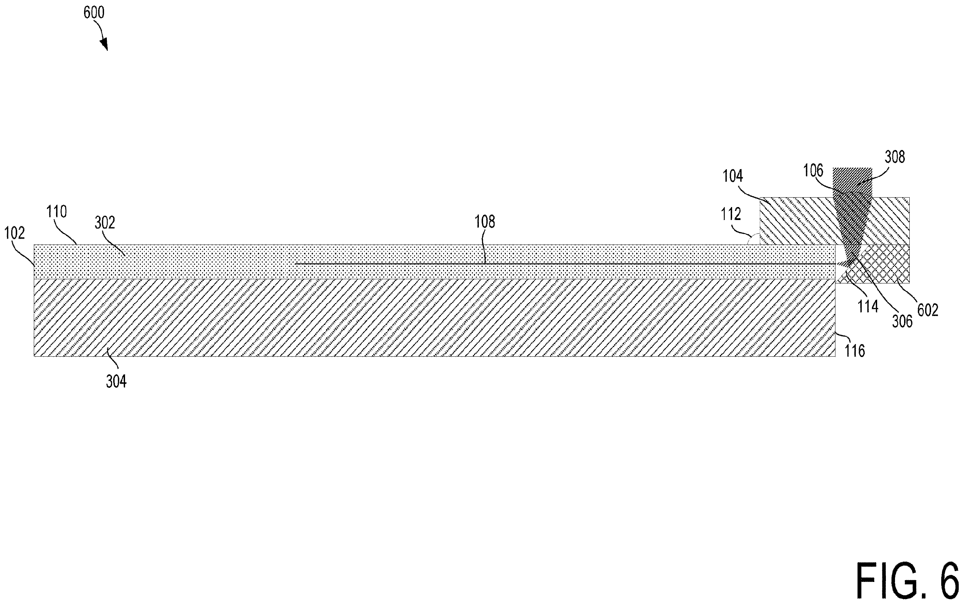

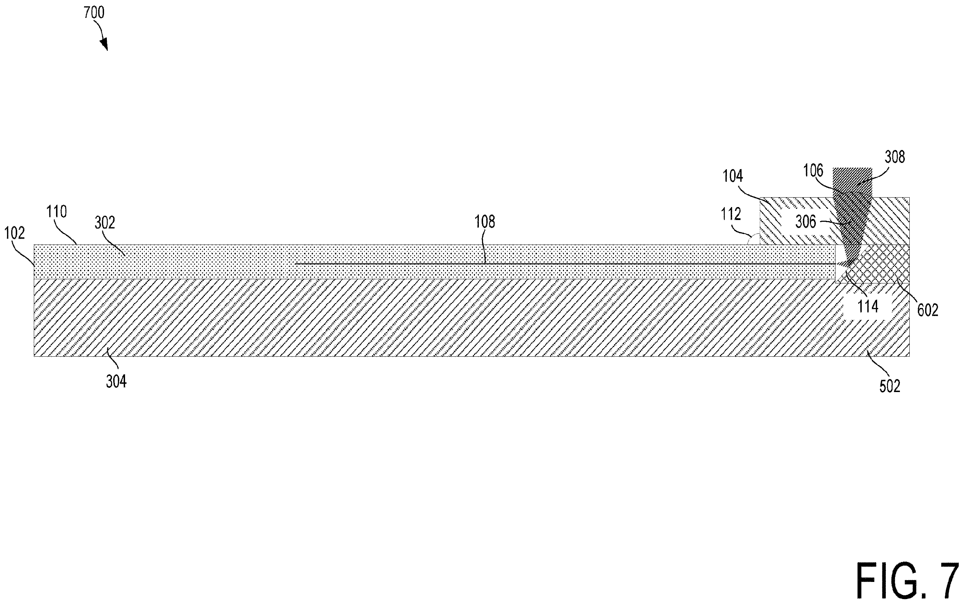

In the illustrative embodiment, the reflective surface 114 is on a reflective component 118 that is part of the lens array 104, and the reflective component 118 extends past the edge of the PIC die 102. as shown in FIG. 3. In other embodiments, the reflective component 118 may be supported by part of the PIC die 102. For example, in some embodiments, an extension platform 502 may extend from the PIC die 102 that supports the reflective component 118, as shown in FIG. 5. Additionally or alternatively, in other embodiments, the reflective component 118 may be separate from the lens array 104. For example, the reflective component 602 may be separate from the lens array 104, as shown in FIG. 6. The separate reflective component 602 may be supported by an extension platform 502, as shown in FIG. 7.

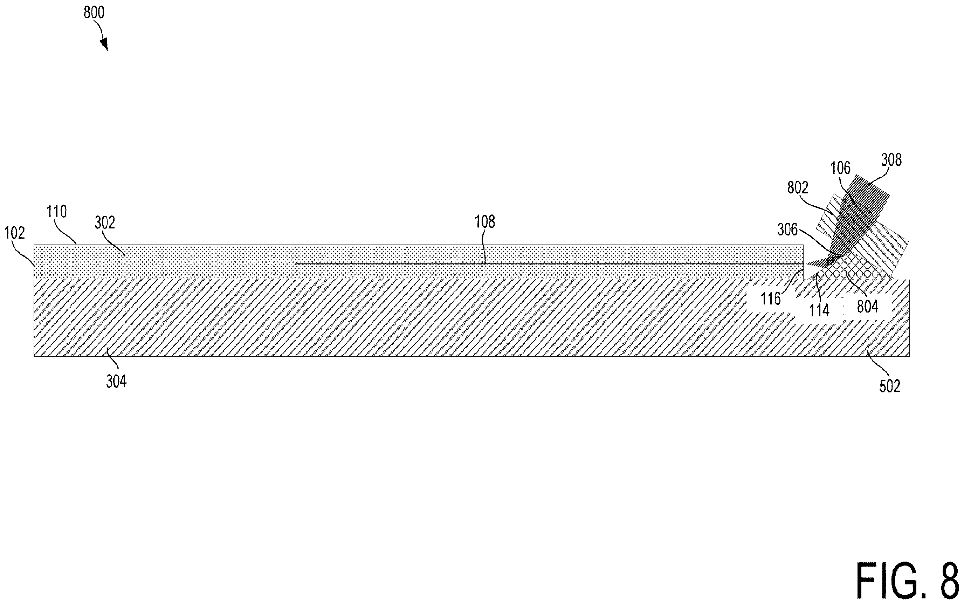

It should be appreciated that the reflective surface 114 may be oriented at an angle other than 45°. For example, in one embodiment, a system 800 includes a lens array 802 mounted on a reflective component 804 with a reflective surface 114 as shown in FIG. 8. The system 800 (and other systems 900, 1000, 1100, 1200, 1300, 1400, 1500, 1600, 1700, 1800 described below) includes other components, such as a PIC die 102, waveguides 108, etc., that may be similar to or the same as corresponding components in the system 100, unless as otherwise stated or depicted. A description of those components will not be repeated in the interest of clarity. The reflective surface 114 is at an angle of 30° relative to the top surface 110 of the PIC die 102. The beams 306 reflected off the reflective surface 114 then have a central ray at an angle of 60° relative to the waveguides 108. The collimated beams 308 then also are at an angle of 60° relative to the waveguides 108. More generally, the reflective surface 114 may be at any suitable angle relative to the top surface, such as at an angle of 10-80°. Similarly, the collimated beams 308 may be at any suitable angle relative to the waveguides, such as 20-160°.

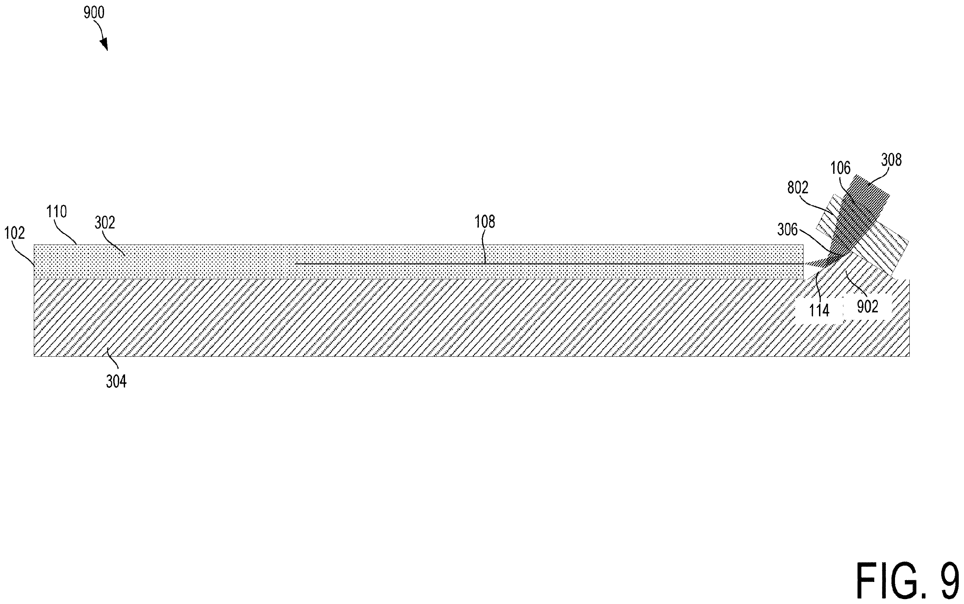

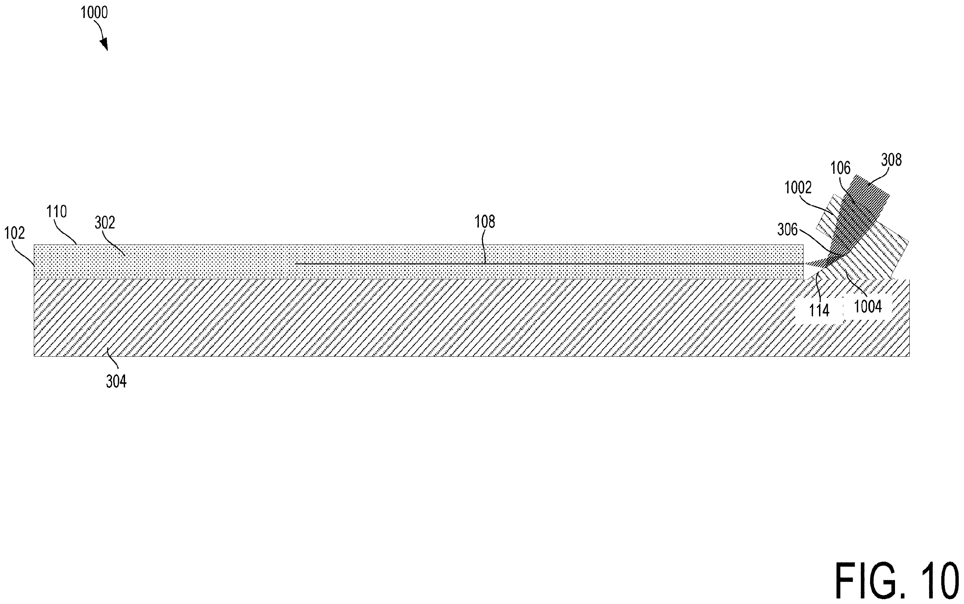

In one embodiment, the reflective component 804 is separate from the lens array 802, as shown in FIG. 8. The reflective component 804 may be disposed on an extension platform 502. In another embodiment, the reflective component 902 may be part of the PIC die 102, as shown in FIG. 9. In yet another embodiment, the reflective component 1004 may be part of the lens array 1002, as shown in FIG. 10.

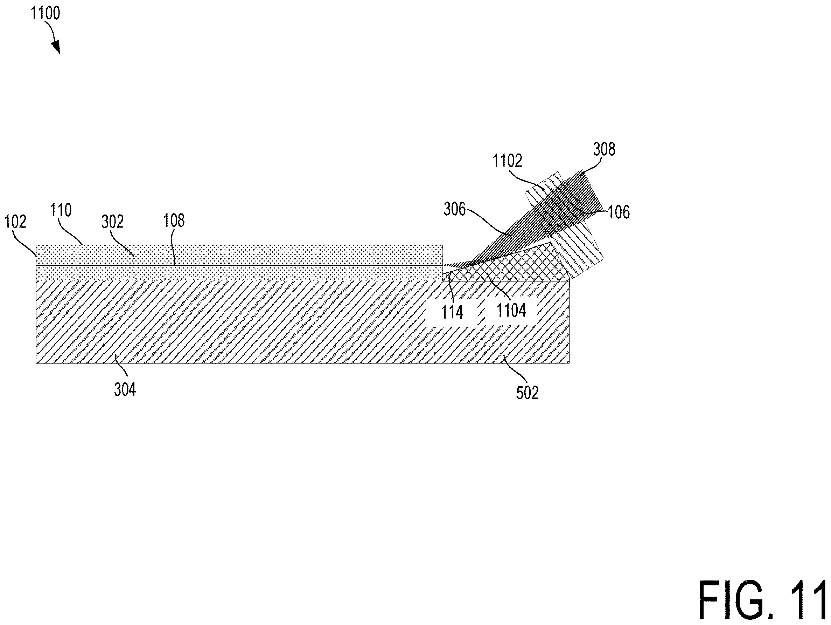

In some embodiments, the reflective surface 114 may be oriented at another angle. For example, in one embodiment, a system 1100 includes a lens array 1102 mounted on a reflective component 804 with a reflective surface 114, as shown in FIG. 11, similar to the system 800 shown in FIG. 8. The reflective surface 114 is at an angle of 15° relative to the top surface 110 of the PIC die 102. The beams 306 reflected off the reflective surface 114 then have a central ray at an angle of 30° relative to the waveguides 108. The collimated beams 308 then also are at an angle of 30° relative to the waveguides 108.

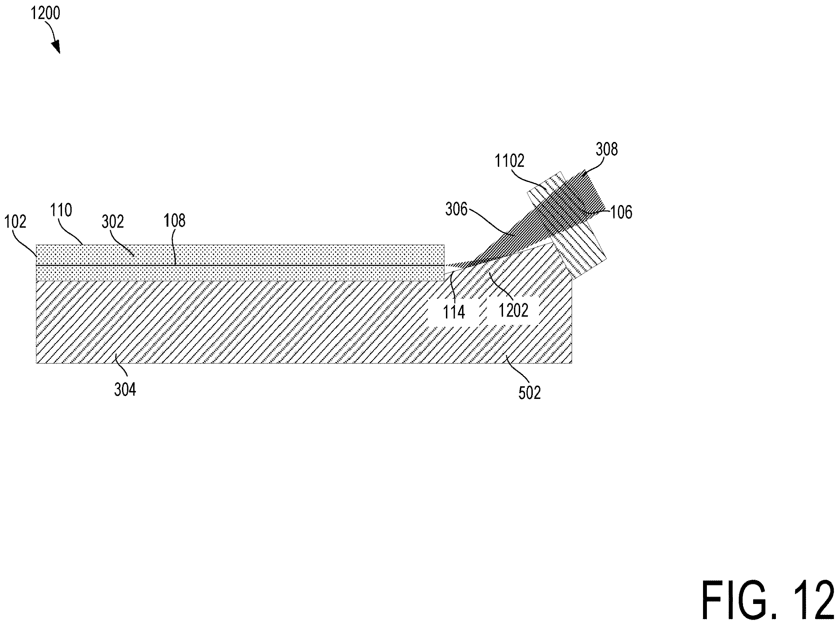

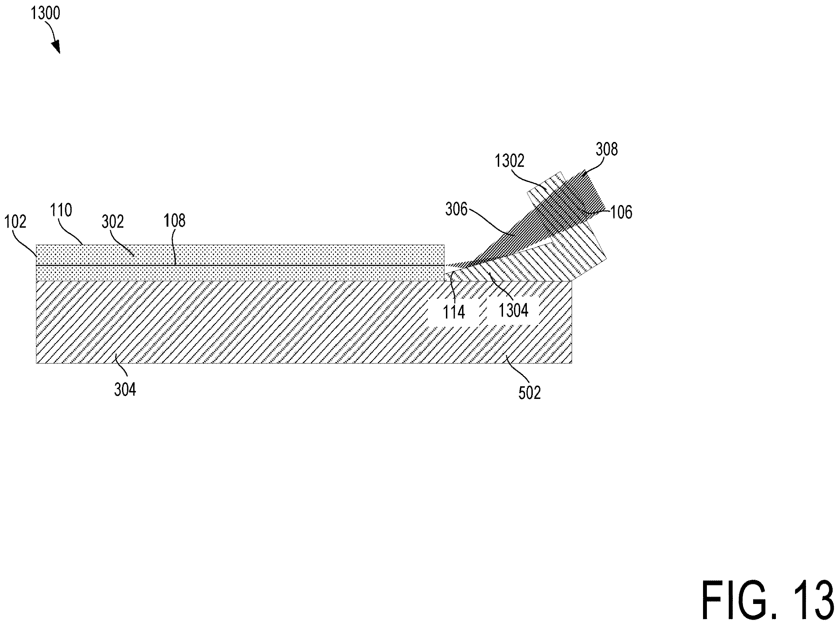

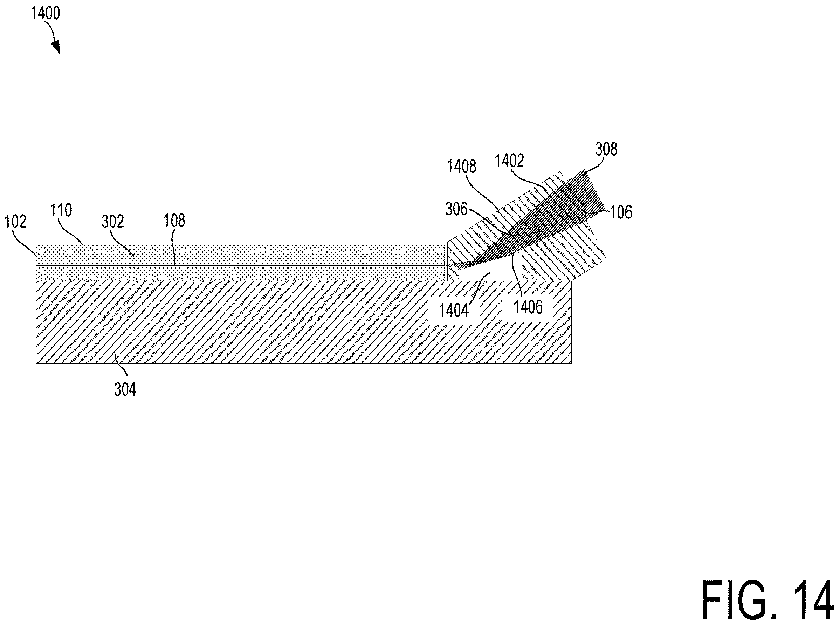

In one embodiment, the reflective component 1104 is separate from the lens array 1102, as shown in FIG. 11. The reflective component 1104 may be disposed on an extension platform 502. In another embodiment, the reflective component 1202 may be part of the PIC die 102, as shown in FIG. 12. In yet another embodiment, the reflective component 1304 may be part of the lens array 1302, as shown in FIG. 13. In still another embodiment, the reflective surface 1406 may be implemented through total internal reflection between the material of the lens array 1402 and a cavity 1404 defined in the lens array 1402 filled with, e.g., air or other low-index material, as shown in FIG. 14. In such an embodiment, the lens array 1402 may have a top surface 1408 that is parallel to the beams 308. In other embodiments, a similar lens array 1502 may have a top surface 1504 parallel to the top surface 110 of the PIC die 102.

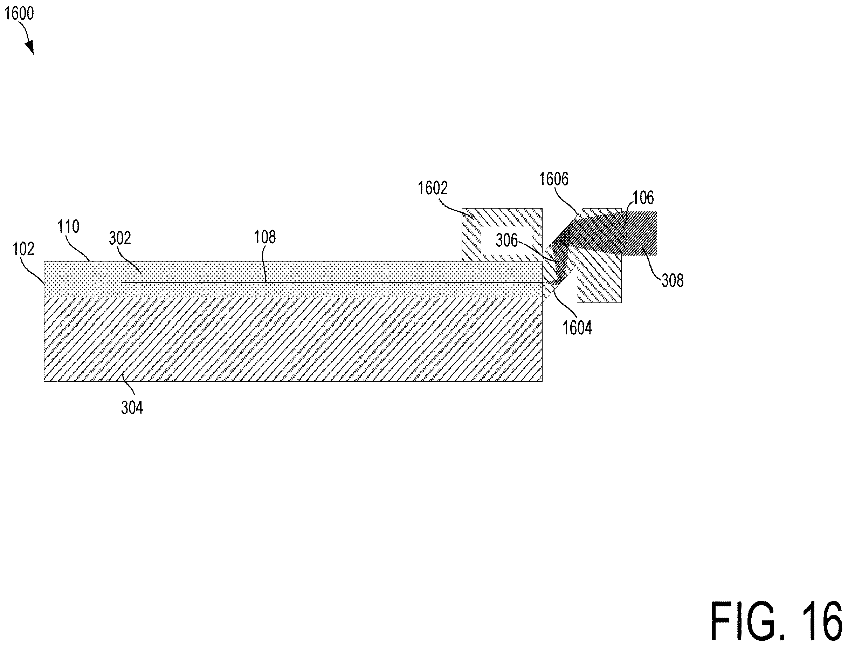

In some embodiments, two or more reflective surfaces 1604, 1606 may be used to reflect the expanding beams two or more times, as shown in FIG. 16. In one embodiment, the reflective surfaces 1604, 1606 may be implemented using total internal reflection between surfaces of the lens array 1602 and air, as shown in FIG. 16. In other embodiments, the reflective surfaces 1604, 1606 may be implemented using, e.g., a metallic reflective surface or an interference film.

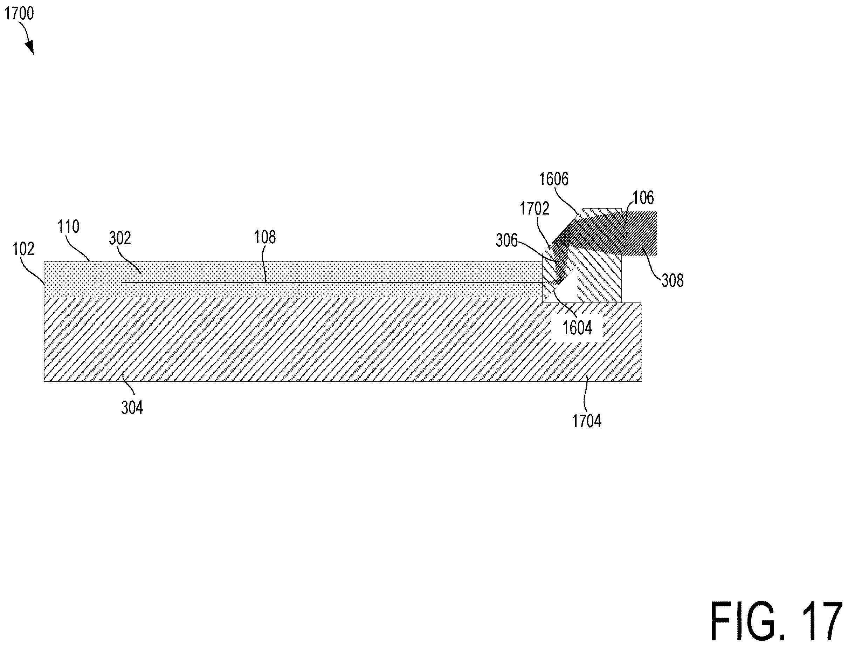

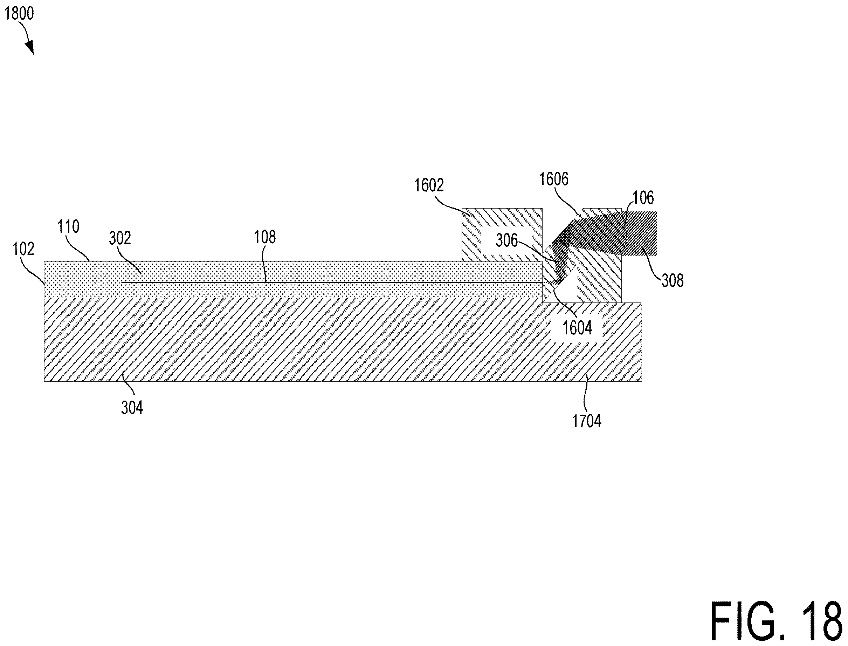

In some embodiments, part of the lens array 1602 may be disposed on the top surface 110 of the PIC die 102, as shown in FIG. 16. In other embodiments, such a lens array 1702 may be supported by an extension platform 1704, as shown in FIG. 17. In still other embodiments, such a lens array 1602 may be supported by both the top surface 110 of the PIC die 102 and an extension platform 1704, as shown in FIG. 18.

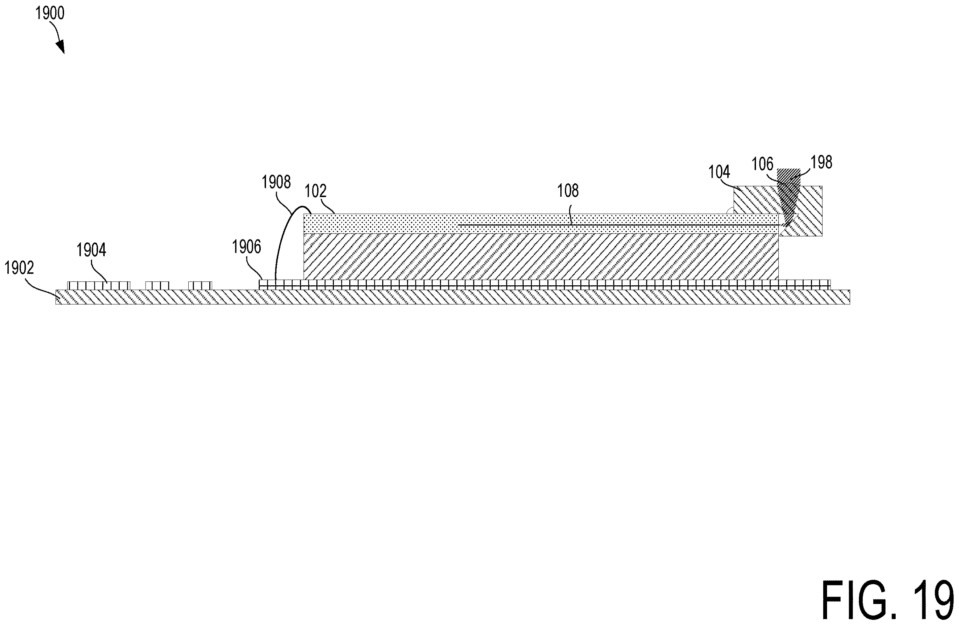

Referring now to FIG. 19, in one embodiment, a system 1900 includes a circuit board 1902, on which a PIC die 102 and/or other components such as electrical integrated circuits (EICs) 1904. The PIC die 102 may have one or more waveguides 108 defined in it and a lens array 104 mounted on it, as described above. In the illustrative embodiment, a submount 1906 is positioned between the circuit board 1902 and the PIC die 102. In other embodiments, a submount 1906 may not be used. In use, the PIC die 102 may be connected to the submount 1906 and/or the board 1902 with use of one or more wire bonds 1908, which may connect to electrical pads or contacts on the PIC die 102.

The illustrative circuit board 1902 may be made from ceramic, glass, and/or organic based materials with fiberglass and resin, such as FR-4. The circuit board 1902 may have any suitable length or width, such as 10-500 millimeters. The circuit board 1902 may have any suitable thickness, such as 0.2-5 millimeters. The circuit board 1902 may support additional components besides the PIC die 102, such as an integrated circuit component, a processor unit, a memory device, an accelerator device, etc. The system 1900 may be embodied as or otherwise include a system-on-a-chip, a network router, a network switch, a network interface controller, a server computer, a mobile computing device, a component on a communications satellite, etc.

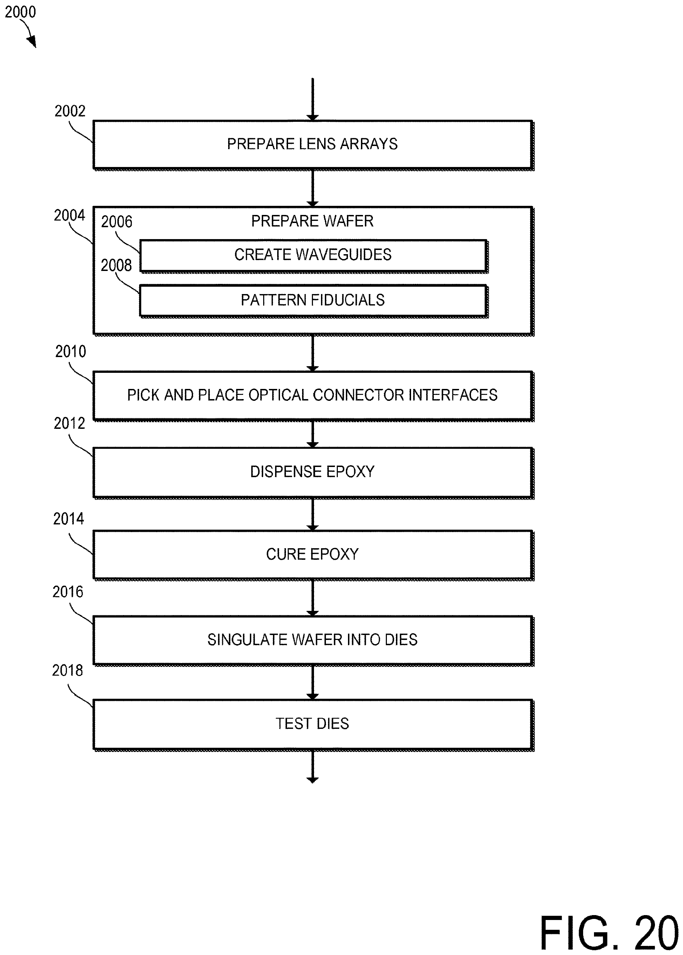

Referring now to FIG. 20, in one embodiment, a flowchart for a method 2000 for creating the system 100 with a PIC die 102 is shown. The method 2000 may be executed by a technician and/or by one or more automated machines. In some embodiments, one or more machines may be programmed to do some or all of the steps of the method 2000. Such a machine may include, e.g., a memory, a processor, data storage, etc. The memory and/or data storage may store instructions that, when executed by the machine, causes the machine to perform some or all of the steps of the method 2000. The method 2000 may use any suitable set of techniques that are used in semiconductor processing, such as chemical vapor deposition, atomic layer deposition, physical layer deposition, molecular beam epitaxy, layer transfer, photolithography, ion implantation, dry etching, wet etching, thermal treatments, flip chip, layer transfer, magnetron sputter deposition, pulsed laser deposition, etc. It should be appreciated that the method 2000 is merely one embodiment of a method to create the system 100, and other methods may be used to create the system 100. In some embodiments, steps of the method 2000 may be performed in a different order than that shown in the flowchart. It should be appreciated that the method 2000 may be adapted to create different systems disclosed herein, such as the system 800, 900, 1000, 1100, 1200, 1300, 1400, 1500, 1600, 1700, 1800, etc.

The method 2000 begins in block 2002, in which one or more lens arrays 104 are prepared. The lens arrays 104 may be prepared using any suitable process, such as injection molding, using a glass wafer, etc. In the illustrative embodiment, each lens array 104 is prepared separately. In some embodiments, several lens arrays 104 may be created, one for each PIC die 102 in a wafer. In such an embodiment, all of the lens arrays 104 for a wafer may be placed as one component, and the lens arrays 104 can be singulated when the PIC dies 102 are singulated.

In block 2004, a wafer of photonic integrated circuits is prepared. The wafer may include, e.g., lasers or other light sources, optical detectors, filters, splitters, electrical connections, etc. As part of preparing the wafer, waveguides 180 are created in block 2006. Fiducials may be patterned in block 2008.

In block 2010, a lens array 104 is placed over each set of waveguides 108, such as by using a pick-and-place machine. The pick-and-place machine may use the fiducials to precisely place the lens array 104 in a desired position. In the illustrative embodiment, the lens array 104 is positioned to within, e.g., 0.5-1.5 micrometers in the directions perpendicular to the propagation of light from the waveguides 108. More generally, the lens array 104 may be positioned to within 0.5-20 micrometers in any direction, depending on the embodiment.

In block 2012, epoxy 112 is dispensed where the lens array 104 meets the PIC die 102. The epoxy 112 may be dispensed as, e.g., drops at discrete locations and/or as a line.

In block 2014, the epoxy 112 is cured, securing the lens array 104 in place. The epoxy 112 can be cured by exposure to ultraviolet light. Additionally or alternatively, the epoxy 112 can be cured in an oven. In block 2016, the wafer is singulated into several PIC dies 102.

In block 2018, in some embodiments, the PIC dies 102 are individually tested, such as by providing power to the PIC die 102 and testing operation of the photonic integrated circuit and/or alignment of the lens array 104. PIC dies 102 that are faulty can be discarded at this stage, preventing any PIC die 102 from being incorporated into a package or other component, which would then reduce the yield of the packaging process.

The PIC dies 102 may then be placed on a circuit board, as shown in FIG. 19, integrated into a package, possibly with one or more other components, or used in any other suitable manner.

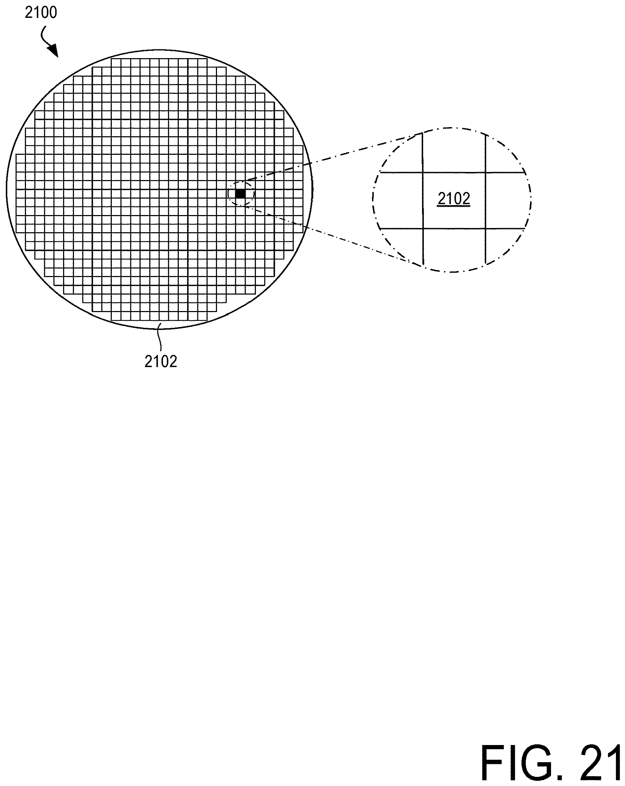

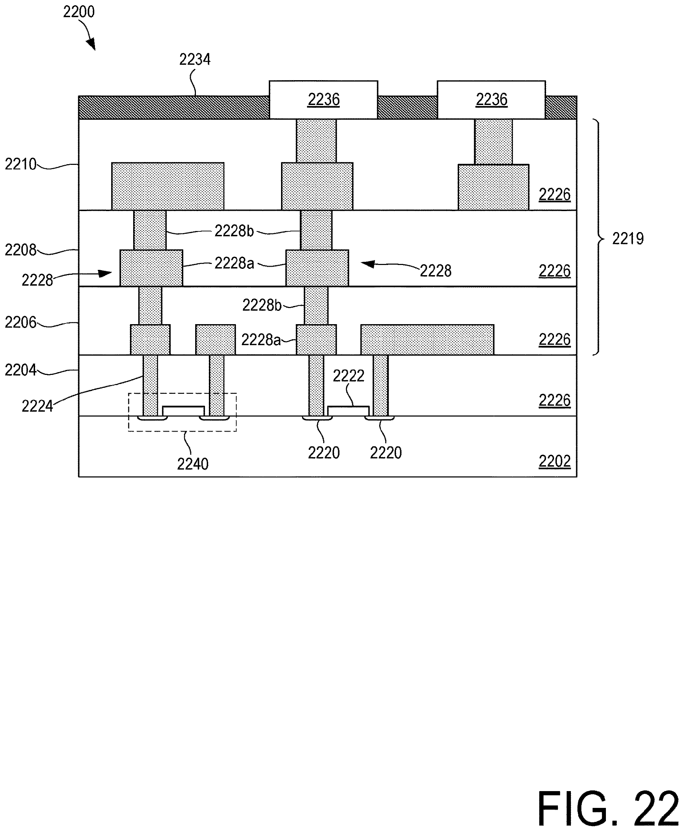

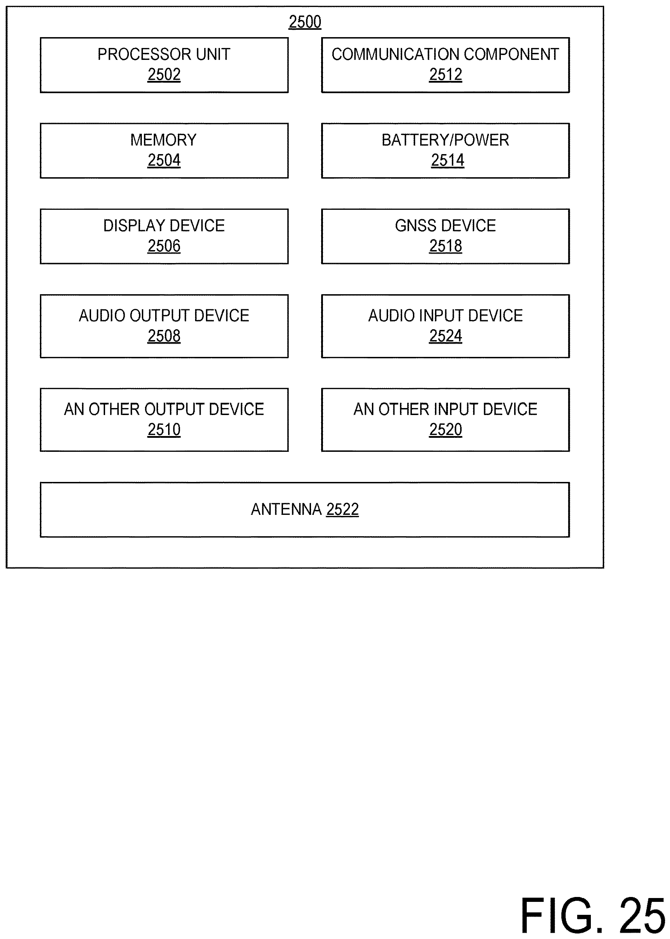

FIG. 21 is a top view of a wafer 2100 and dies 2102 that may be included in any of the systems 100 disclosed herein (e.g., as any suitable ones of the dies 102). The wafer 2100 may be composed of semiconductor material and may include one or more dies 2102 having integrated circuit structures formed on a surface of the wafer 2100. The individual dies 2102 may be a repeating unit of an integrated circuit product that includes any suitable integrated circuit. After the fabrication of the semiconductor product is complete, the wafer 2100 may undergo a singulation process in which the dies 2102 are separated from one another to provide discrete "chips" of the integrated circuit product. The die 2102 may be any of the dies 102 disclosed herein. The die 2102 may include one or more transistors (e.g., some of the transistors 2240 of FIG. 22, discussed below), supporting circuitry to route electrical signals to the transistors, passive components (e.g., signal traces, resistors, capacitors, or inductors), and/or any other integrated circuit components. In some embodiments, the wafer 2100 or the die 2102 may include a memory device (e.g., a random access memory (RAM) device, such as a static RAM (SRAM) device, a magnetic RAM (MRAM) device, a resistive RAM (RRAM) device, a conductive-bridging RAM (CBRAM) device, etc.), a logic device (e.g., an AND, OR, NAND, or NOR gate), or any other suitable circuit element. Multiple ones of these devices may be combined on a single die 2102. For example, a memory array formed by multiple memory devices may be formed on a same die 2102 as a processor unit (e.g., the processor unit 2502 of FIG. 25) or other logic that is configured to store information in the memory devices or execute instructions stored in the memory array. Various ones of the systems 100 disclosed herein may be manufactured using a die-to-wafer assembly technique in which some dies 102 are attached to a wafer 2100 that include others of the dies 102, and the wafer 2100 is subsequently singulated.

FIG. 22 is a cross-sectional side view of an integrated circuit device 2200 that may be included in any of the systems 100 disclosed herein (e.g., in any of the dies 102). One or more of the integrated circuit devices 2200 may be included in one or more dies 2102 (FIG. 21). The integrated circuit device 2200 may be formed on a die substrate 2202 (e.g., the wafer 2100 of FIG. 21) and may be included in a die (e.g., the die 2102 of FIG. 21). The die substrate 2202 may be a semiconductor substrate composed of semiconductor material systems including, for example, n-type or p-type materials systems (or a combination of both). The die substrate 2202 may include, for example, a crystalline substrate formed using a bulk silicon or a silicon-on-insulator (SOI) substructure. In some embodiments, the die substrate 2202 may be formed using alternative materials, which may or may not be combined with silicon, that include, but are not limited to, germanium, indium antimonide, lead telluride, indium arsenide, indium phosphide, gallium arsenide, or gallium antimonide. Further materials classified as group II-VI, III-V, or IV may also be used to form the die substrate 2202. Although a few examples of materials from which the die substrate 2202 may be formed are described here, any material that may serve as a foundation for an integrated circuit device 2200 may be used. The die substrate 2202 may be part of a singulated die (e.g., the dies 2102 of FIG. 21) or a wafer (e.g., the wafer 2100 of FIG. 21).

The integrated circuit device 2200 may include one or more device layers 2204 disposed on the die substrate 2202. The device layer 2204 may include features of one or more transistors 2240 (e.g., metal oxide semiconductor field-effect transistors (MOSFETs)) formed on the die substrate 2202. The transistors 2240 may include, for example, one or more source and/or drain (S/D) regions 2220, a gate 2222 to control current flow between the S/D regions 2220, and one or more S/D contacts 2224 to route electrical signals to/from the S/D regions 2220. The transistors 2240 may include additional features not depicted for the sake of clarity, such as device isolation regions, gate contacts, and the like. The transistors 2240 are not limited to the type and configuration depicted in FIG. 22 and may include a wide variety of other types and configurations such as, for example, planar transistors, non-planar transistors, or a combination of both. Non-planar transistors may include FinFET transistors, such as double-gate transistors or tri-gate transistors, and wrap-around or all-around gate transistors, such as nanoribbon, nanosheet, or nanowire transistors.

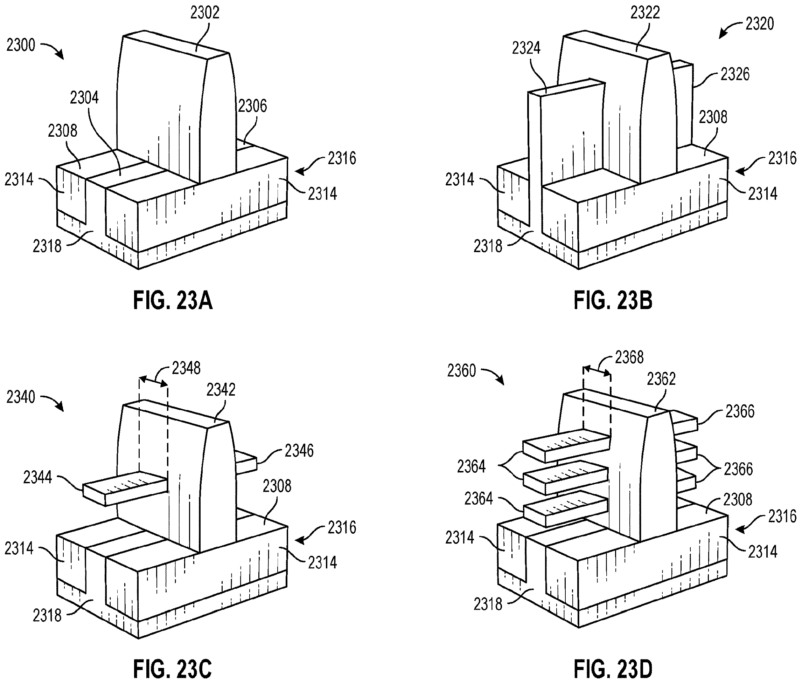

FIGS. 23A-23D are simplified perspective views of example planar, FinFET, gate-all-around, and stacked gate-all-around transistors. The transistors illustrated in FIGS. 23A-23D are formed on a substrate 2316 having a surface 2308. Isolation regions 2314 separate the source and drain regions of the transistors from other transistors and from a bulk region 2318 of the substrate 2316.

FIG. 23A is a perspective view of an example planar transistor 2300 comprising a gate 2302 that controls current flow between a source region 2304 and a drain region 2306. The transistor 2300 is planar in that the source region 2304 and the drain region 2306 are planar with respect to the substrate surface 2308.

FIG. 23B is a perspective view of an example FinFET transistor 2320 comprising a gate 2322 that controls current flow between a source region 2324 and a drain region 2326. The transistor 2320 is non-planar in that the source region 2324 and the drain region 2326 comprise "fins" that extend upwards from the substrate surface 2328. As the gate 2322 encompasses three sides of the semiconductor fin that extends from the source region 2324 to the drain region 2326, the transistor 2320 can be considered a tri-gate transistor. FIG. 23B illustrates one S/D fin extending through the gate 2322, but multiple S/D fins can extend through the gate of a FinFET transistor.

FIG. 23C is a perspective view of a gate-all-around (GAA) transistor 2340 comprising a gate 2342 that controls current flow between a source region 2344 and a drain region 2346. The transistor 2340 is non-planar in that the source region 2344 and the drain region 2346 are elevated from the substrate surface 2328.

FIG. 23D is a perspective view of a GAA transistor 2360 comprising a gate 2362 that controls current flow between multiple elevated source regions 2364 and multiple elevated drain regions 2366. The transistor 2360 is a stacked GAA transistor as the gate controls the flow of current between multiple elevated S/D regions stacked on top of each other. The transistors 2340 and 2360 are considered gate-all-around transistors as the gates encompass all sides of the semiconductor portions that extends from the source regions to the drain regions. The transistors 2340 and 2360 can alternatively be referred to as nanowire, nanosheet, or nanoribbon transistors depending on the width (e.g., widths 2348 and 2368 of transistors 2340 and 2360, respectively) of the semiconductor portions extending through the gate.

Returning to FIG. 22, a transistor 2240 may include a gate 2222 formed of at least two layers, a gate dielectric and a gate electrode. The gate dielectric may include one layer or a stack of layers. The one or more layers may include silicon oxide, silicon dioxide, silicon carbide, and/or a high-k dielectric material.

The high-k dielectric material may include elements such as hafnium, silicon, oxygen, titanium, tantalum, lanthanum, aluminum, zirconium, barium, strontium, yttrium, lead, scandium, niobium, and zinc. Examples of high-k materials that may be used in the gate dielectric include, but are not limited to, hafnium oxide, hafnium silicon oxide, lanthanum oxide, lanthanum aluminum oxide, zirconium oxide, zirconium silicon oxide, tantalum oxide, titanium oxide, barium strontium titanium oxide, barium titanium oxide, strontium titanium oxide, yttrium oxide, aluminum oxide, lead scandium tantalum oxide, and lead zinc niobate. In some embodiments, an annealing process may be carried out on the gate dielectric to improve its quality when a high-k material is used.

The gate electrode may be formed on the gate dielectric and may include at least one p-type work function metal or n-type work function metal, depending on whether the transistor 2240 is to be a p-type metal oxide semiconductor (PMOS) or an n-type metal oxide semiconductor (NMOS) transistor. In some implementations, the gate electrode may consist of a stack of two or more metal layers, where one or more metal layers are work function metal layers and at least one metal layer is a fill metal layer. Further metal layers may be included for other purposes, such as a barrier layer.

For a PMOS transistor, metals that may be used for the gate electrode include, but are not limited to, ruthenium, palladium, platinum, cobalt, nickel, conductive metal oxides (e.g., ruthenium oxide), and any of the metals discussed below with reference to an NMOS transistor (e.g., for work function tuning). For an NMOS transistor, metals that may be used for the gate electrode include, but are not limited to, hafnium, zirconium, titanium, tantalum, aluminum, alloys of these metals, carbides of these metals (e.g., hafnium carbide, zirconium carbide, titanium carbide, tantalum carbide, and aluminum carbide), and any of the metals discussed above with reference to a PMOS transistor (e.g., for work function tuning).

In some embodiments, when viewed as a cross-section of the transistor 2240 along the source-channel-drain direction, the gate electrode may consist of a U-shaped structure that includes a bottom portion substantially parallel to the surface of the die substrate 2202 and two sidewall portions that are substantially perpendicular to the top surface of the die substrate 2202. In other embodiments, at least one of the metal layers that form the gate electrode may simply be a planar layer that is substantially parallel to the top surface of the die substrate 2202 and does not include sidewall portions substantially perpendicular to the top surface of the die substrate 2202. In other embodiments, the gate electrode may consist of a combination of U-shaped structures and planar, non-U-shaped structures. For example, the gate electrode may consist of one or more U-shaped metal layers formed atop one or more planar, non-U-shaped layers.

In some embodiments, a pair of sidewall spacers may be formed on opposing sides of the gate stack to bracket the gate stack. The sidewall spacers may be formed from materials such as silicon nitride, silicon oxide, silicon carbide, silicon nitride doped with carbon, and silicon oxynitride. Processes for forming sidewall spacers are well known in the art and generally include deposition and etching process steps. In some embodiments, a plurality of spacer pairs may be used; for instance, two pairs, three pairs, or four pairs of sidewall spacers may be formed on opposing sides of the gate stack.

The S/D regions 2220 may be formed within the die substrate 2202 adjacent to the gate 2222 of individual transistors 2240. The S/D regions 2220 may be formed using an implantation/diffusion process or an etching/deposition process, for example. In the former process, dopants such as boron, aluminum, antimony, phosphorous, or arsenic may be ion-implanted into the die substrate 2202 to form the S/D regions 2220. An annealing process that activates the dopants and causes them to diffuse farther into the die substrate 2202 may follow the ion-implantation process. In the latter process, the die substrate 2202 may first be etched to form recesses at the locations of the S/D regions 2220. An epitaxial deposition process may then be carried out to fill the recesses with material that is used to fabricate the S/D regions 2220. In some implementations, the S/D regions 2220 may be fabricated using a silicon alloy such as silicon germanium or silicon carbide. In some embodiments, the epitaxially deposited silicon alloy may be doped in situ with dopants such as boron, arsenic, or phosphorous. In some embodiments, the S/D regions 2220 may be formed using one or more alternate semiconductor materials such as germanium or a group III-V material or alloy. In further embodiments, one or more layers of metal and/or metal alloys may be used to form the S/D regions 2220.

Electrical signals, such as power and/or input/output (I/O) signals, may be routed to and/or from the devices (e.g., transistors 2240) of the device layer 2204 through one or more interconnect layers disposed on the device layer 2204 (illustrated in FIG. 22 as interconnect layers 2206-2210). For example, electrically conductive features of the device layer 2204 (e.g., the gate 2222 and the S/D contacts 2224) may be electrically coupled with the interconnect structures 2228 of the interconnect layers 2206-2210. The one or more interconnect layers 2206-2210 may form a metallization stack (also referred to as an "ILD stack") 2219 of the integrated circuit device 2200.

The interconnect structures 2228 may be arranged within the interconnect layers 2206-2210 to route electrical signals according to a wide variety of designs; in particular, the arrangement is not limited to the particular configuration of interconnect structures 2228 depicted in FIG. 22. Although a particular number of interconnect layers 2206-2210 is depicted in FIG. 22, embodiments of the present disclosure include integrated circuit devices having more or fewer interconnect layers than depicted.

In some embodiments, the interconnect structures 2228 may include lines 2228a and/or vias 2228b filled with an electrically conductive material such as a metal. The lines 2228a may be arranged to route electrical signals in a direction of a plane that is substantially parallel with a surface of the die substrate 2202 upon which the device layer 2204 is formed. For example, the lines 2228a may route electrical signals in a direction in and out of the page and/or in a direction across the page. The vias 2228b may be arranged to route electrical signals in a direction of a plane that is substantially perpendicular to the surface of the die substrate 2202 upon which the device layer 2204 is formed. In some embodiments, the vias 2228b may electrically couple lines 2228a of different interconnect layers 2206-2210 together.

The interconnect layers 2206-2210 may include a dielectric material 2226 disposed between the interconnect structures 2228, as shown in FIG. 22. In some embodiments, dielectric material 2226 disposed between the interconnect structures 2228 in different ones of the interconnect layers 2206-2210 may have different compositions; in other embodiments, the composition of the dielectric material 2226 between different interconnect layers 2206-2210 may be the same. The device layer 2204 may include a dielectric material 2226 disposed between the transistors 2240 and a bottom layer of the metallization stack as well. The dielectric material 2226 included in the device layer 2204 may have a different composition than the dielectric material 2226 included in the interconnect layers 2206-2210; in other embodiments, the composition of the dielectric material 2226 in the device layer 2204 may be the same as a dielectric material 2226 included in any one of the interconnect layers 2206-2210.

A first interconnect layer 2206 (referred to as Metal 1 or "M1") may be formed directly on the device layer 2204. In some embodiments, the first interconnect layer 2206 may include lines 2228a and/or vias 2228b, as shown. The lines 2228a of the first interconnect layer 2206 may be coupled with contacts (e.g., the S/D contacts 2224) of the device layer 2204. The vias 2228b of the first interconnect layer 2206 may be coupled with the lines 2228a of a second interconnect layer 2208.

The second interconnect layer 2208 (referred to as Metal 2 or "M2") may be formed directly on the first interconnect layer 2206. In some embodiments, the second interconnect layer 2208 may include via 2228b to couple the lines 2228 of the second interconnect layer 2208 with the lines 2228a of a third interconnect layer 2210. Although the lines 2228a and the vias 2228b are structurally delineated with a line within individual interconnect layers for the sake of clarity, the lines 2228a and the vias 2228b may be structurally and/or materially contiguous (e.g., simultaneously filled during a dual-damascene process) in some embodiments.

The third interconnect layer 2210 (referred to as Metal 3 or "M3") (and additional interconnect layers, as desired) may be formed in succession on the second interconnect layer 2208 according to similar techniques and configurations described in connection with the second interconnect layer 2208 or the first interconnect layer 2206. In some embodiments, the interconnect layers that are "higher up" in the metallization stack 2219 in the integrated circuit device 2200 (i.e., farther away from the device layer 2204) may be thicker that the interconnect layers that are lower in the metallization stack 2219, with lines 2228a and vias 2228b in the higher interconnect layers being thicker than those in the lower interconnect layers.

The integrated circuit device 2200 may include a solder resist material 2234 (e.g., polyimide or similar material) and one or more conductive contacts 2236 formed on the interconnect layers 2206-2210. In FIG. 22, the conductive contacts 2236 are illustrated as taking the form of bond pads. The conductive contacts 2236 may be electrically coupled with the interconnect structures 2228 and configured to route the electrical signals of the transistor(s) 2240 to external devices. For example, solder bonds may be formed on the one or more conductive contacts 2236 to mechanically and/or electrically couple an integrated circuit die including the integrated circuit device 2200 with another component (e.g., a printed circuit board). The integrated circuit device 2200 may include additional or alternate structures to route the electrical signals from the interconnect layers 2206-2210; for example, the conductive contacts 2236 may include other analogous features (e.g., posts) that route the electrical signals to external components.

In some embodiments in which the integrated circuit device 2200 is a double-sided die, the integrated circuit device 2200 may include another metallization stack (not shown) on the opposite side of the device layer(s) 2204. This metallization stack may include multiple interconnect layers as discussed above with reference to the interconnect layers 2206-2210, to provide conductive pathways (e.g., including conductive lines and vias) between the device layer(s) 2204 and additional conductive contacts (not shown) on the opposite side of the integrated circuit device 2200 from the conductive contacts 2236.

In other embodiments in which the integrated circuit device 2200 is a double-sided die, the integrated circuit device 2200 may include one or more through silicon vias (TSVs) through the die substrate 2202; these TSVs may make contact with the device layer(s) 2204, and may provide conductive pathways between the device layer(s) 2204 and additional conductive contacts (not shown) on the opposite side of the integrated circuit device 2200 from the conductive contacts 2236. In some embodiments, TSVs extending through the substrate can be used for routing power and ground signals from conductive contacts on the opposite side of the integrated circuit device 2200 from the conductive contacts 2236 to the transistors 2240 and any other components integrated into the die 2200, and the metallization stack 2219 can be used to route I/O signals from the conductive contacts 2236 to transistors 2240 and any other components integrated into the die 2200.

Multiple integrated circuit devices 2200 may be stacked with one or more TSVs in the individual stacked devices providing connection between one of the devices to any of the other devices in the stack. For example, one or more high-bandwidth memory (HBM) integrated circuit dies can be stacked on top of a base integrated circuit die and TSVs in the HBM dies can provide connection between the individual HBM and the base integrated circuit die. Conductive contacts can provide additional connections between adjacent integrated circuit dies in the stack. In some embodiments, the conductive contacts can be fine-pitch solder bumps (microbumps).

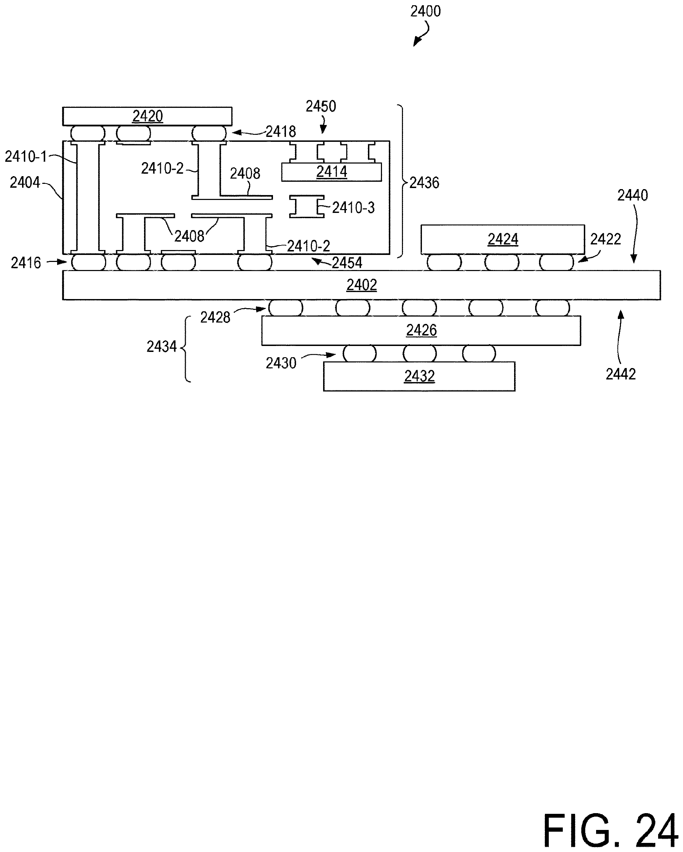

FIG. 24 is a cross-sectional side view of an integrated circuit device assembly 2400 that may include any of the systems 100 disclosed herein. In some embodiments, the integrated circuit device assembly 2400 may be a system100. The integrated circuit device assembly 2400 includes a number of components disposed on a circuit board 2402 (which may be a motherboard, system board, mainboard, etc.). The integrated circuit device assembly 2400 includes components disposed on a first face 2440 of the circuit board 2402 and an opposing second face 2442 of the circuit board 2402; generally, components may be disposed on one or both faces 2440 and 2442. Any of the integrated circuit components discussed below with reference to the integrated circuit device assembly 2400 may take the form of any suitable ones of the embodiments of the systems 100 disclosed herein.

In some embodiments, the circuit board 2402 may be a printed circuit board (PCB) including multiple metal (or interconnect) layers separated from one another by layers of dielectric material and interconnected by electrically conductive vias. The individual metal layers comprise conductive traces. Any one or more of the metal layers may be formed in a desired circuit pattern to route electrical signals (optionally in conjunction with other metal layers) between the components coupled to the circuit board 2402. In other embodiments, the circuit board 2402 may be a non-PCB substrate. In some embodiments the circuit board 2402 may be, for example, the circuit board 1902. The integrated circuit device assembly 2400 illustrated in FIG. 24 includes a package-on-interposer structure 2436 coupled to the first face 2440 of the circuit board 2402 by coupling components 2416. The coupling components 2416 may electrically and mechanically couple the package-on-interposer structure 2436 to the circuit board 2402, and may include solder balls (as shown in FIG. 24), pins (e.g., as part of a pin grid array (PGA), contacts (e.g., as part of a land grid array (LGA)), male and female portions of a socket, an adhesive, an underfill material, and/or any other suitable electrical and/or mechanical coupling structure. The coupling components 2416 may serve as the coupling components illustrated or described for any of the substrate assembly or substrate assembly components described herein, as appropriate.

The package-on-interposer structure 2436 may include an integrated circuit component 2420 coupled to an interposer 2404 by coupling components 2418. The coupling components 2418 may take any suitable form for the application, such as the forms discussed above with reference to the coupling components 2416. Although a single integrated circuit component 2420 is shown in FIG. 24, multiple integrated circuit components may be coupled to the interposer 2404; indeed, additional interposers may be coupled to the interposer 2404. The interposer 2404 may provide an intervening substrate used to bridge the circuit board 2402 and the integrated circuit component 2420.

The integrated circuit component 2420 may be a packaged or unpacked integrated circuit product that includes one or more integrated circuit dies (e.g., the die 2102 of FIG. 21, the integrated circuit device 2200 of FIG. 22) and/or one or more other suitable components. A packaged integrated circuit component comprises one or more integrated circuit dies mounted on a package substrate with the integrated circuit dies and package substrate encapsulated in a casing material, such as a metal, plastic, glass, or ceramic. In one example of an unpackaged integrated circuit component 2420, a single monolithic integrated circuit die comprises solder bumps attached to contacts on the die. The solder bumps allow the die to be directly attached to the interposer 2404. The integrated circuit component 2420 can comprise one or more computing system components, such as one or more processor units (e.g., system-on-a-chip (SoC), processor core, graphics processor unit (GPU), accelerator, chipset processor), I/O controller, memory, or network interface controller. In some embodiments, the integrated circuit component 2420 can comprise one or more additional active or passive devices such as capacitors, decoupling capacitors, resistors, inductors, fuses, diodes, transformers, sensors, electrostatic discharge (ESD) devices, and memory devices.

In embodiments where the integrated circuit component 2420 comprises multiple integrated circuit dies, they dies can be of the same type (a homogeneous multi-die integrated circuit component) or of two or more different types (a heterogeneous multi-die integrated circuit component). A multi-die integrated circuit component can be referred to as a multi-chip package (MCP) or multi-chip module (MCM).

In addition to comprising one or more processor units, the integrated circuit component 2420 can comprise additional components, such as embedded DRAM, stacked high bandwidth memory (HBM), shared cache memories, input/output (I/O) controllers, or memory controllers. Any of these additional components can be located on the same integrated circuit die as a processor unit, or on one or more integrated circuit dies separate from the integrated circuit dies comprising the processor units. These separate integrated circuit dies can be referred to as "chiplets". In embodiments where an integrated circuit component comprises multiple integrated circuit dies, interconnections between dies can be provided by the package substrate, one or more silicon interposers, one or more silicon bridges embedded in the package substrate (such as Intel^{®} embedded multi-die interconnect bridges (EMIBs)), or combinations thereof.

Generally, the interposer 2404 may spread connections to a wider pitch or reroute a connection to a different connection. For example, the interposer 2404 may couple the integrated circuit component 2420 to a set of ball grid array (BGA) conductive contacts of the coupling components 2416 for coupling to the circuit board 2402. In the embodiment illustrated in FIG. 24, the integrated circuit component 2420 and the circuit board 2402 are attached to opposing sides of the interposer 2404; in other embodiments, the integrated circuit component 2420 and the circuit board 2402 may be attached to a same side of the interposer 2404. In some embodiments, three or more components may be interconnected by way of the interposer 2404.

In some embodiments, the interposer 2404 may be formed as a PCB, including multiple metal layers separated from one another by layers of dielectric material and interconnected by electrically conductive vias. In some embodiments, the interposer 2404 may be formed of an epoxy resin, a fiberglass-reinforced epoxy resin, an epoxy resin with inorganic fillers, a ceramic material, or a polymer material such as polyimide. In some embodiments, the interposer 2404 may be formed of alternate rigid or flexible materials that may include the same materials described above for use in a semiconductor substrate, such as silicon, germanium, and other group III-V and group IV materials. The interposer 2404 may include metal interconnects 2408 and vias 2410, including but not limited to through hole vias 2410-1 (that extend from a first face 2450 of the interposer 2404 to a second face 2454 of the interposer 2404), blind vias 2410-2 (that extend from the first or second faces 2450 or 2454 of the interposer 2404 to an internal metal layer), and buried vias 2410-3 (that connect internal metal layers).

In some embodiments, the interposer 2404 can comprise a silicon interposer. Through silicon vias (TSV) extending through the silicon interposer can connect connections on a first face of a silicon interposer to an opposing second face of the silicon interposer. In some embodiments, an interposer 2404 comprising a silicon interposer can further comprise one or more routing layers to route connections on a first face of the interposer 2404 to an opposing second face of the interposer 2404.

The interposer 2404 may further include embedded devices 2414, including both passive and active devices. Such devices may include, but are not limited to, capacitors, decoupling capacitors, resistors, inductors, fuses, diodes, transformers, sensors, electrostatic discharge (ESD) devices, and memory devices. More complex devices such as radio frequency devices, power amplifiers, power management devices, antennas, arrays, sensors, and microelectromechanical systems (MEMS) devices may also be formed on the interposer 2404. The package-on-interposer structure 2436 may take the form of any of the package-on-interposer structures known in the art.

The integrated circuit device assembly 2400 may include an integrated circuit component 2424 coupled to the first face 2440 of the circuit board 2402 by coupling components 2422. The coupling components 2422 may take the form of any of the embodiments discussed above with reference to the coupling components 2416, and the integrated circuit component 2424 may take the form of any of the embodiments discussed above with reference to the integrated circuit component 2420.

The integrated circuit device assembly 2400 illustrated in FIG. 24 includes a package-on-package structure 2434 coupled to the second face 2442 of the circuit board 2402 by coupling components 2428. The package-on-package structure 2434 may include an integrated circuit component 2426 and an integrated circuit component 2432 coupled together by coupling components 2430 such that the integrated circuit component 2426 is disposed between the circuit board 2402 and the integrated circuit component 2432. The coupling components 2428 and 2430 may take the form of any of the embodiments of the coupling components 2416 discussed above, and the integrated circuit components 2426 and 2432 may take the form of any of the embodiments of the integrated circuit component 2420 discussed above. The package-on-package structure 2434 may be configured in accordance with any of the package-on-package structures known in the art.

FIG. 25 is a block diagram of an example electrical device 2500 that may include one or more of the systems 100 disclosed herein. For example, any suitable ones of the components of the electrical device 2500 may include one or more of the integrated circuit device assemblies 2400, integrated circuit components 2420, integrated circuit devices 2200, or integrated circuit dies 2102 disclosed herein, and may be arranged in any of the systems 100 disclosed herein. A number of components are illustrated in FIG. 25 as included in the electrical device 2500, but any one or more of these components may be omitted or duplicated, as suitable for the application. In some embodiments, some or all of the components included in the electrical device 2500 may be attached to one or more motherboards mainboards, or system boards. In some embodiments, one or more of these components are fabricated onto a single system-on-a-chip (SoC) die.

Additionally, in various embodiments, the electrical device 2500 may not include one or more of the components illustrated in FIG. 25, but the electrical device 2500 may include interface circuitry for coupling to the one or more components. For example, the electrical device 2500 may not include a display device 2506, but may include display device interface circuitry (e.g., a connector and driver circuitry) to which a display device 2506 may be coupled. In another set of examples, the electrical device 2500 may not include an audio input device 2524 or an audio output device 2508, but may include audio input or output device interface circuitry (e.g., connectors and supporting circuitry) to which an audio input device 2524 or audio output device 2508 may be coupled.

The electrical device 2500 may include one or more processor units 2502 (e.g., one or more processor units). As used herein, the terms "processor unit", "processing unit" or "processor" may refer to any device or portion of a device that processes electronic data from registers and/or memory to transform that electronic data into other electronic data that may be stored in registers and/or memory. The processor unit 2502 may include one or more digital signal processors (DSPs), application-specific integrated circuits (ASICs), central processing units (CPUs), graphics processing units (GPUs), general-purpose GPUs (GPGPUs), accelerated processing units (APUs), field-programmable gate arrays (FPGAs), neural network processing units (NPUs), data processor units (DPUs), accelerators (e.g., graphics accelerator, compression accelerator, artificial intelligence accelerator), controller cryptoprocessors (specialized processors that execute cryptographic algorithms within hardware), server processors, controllers, or any other suitable type of processor units. As such, the processor unit can be referred to as an XPU (or xPU).

The electrical device 2500 may include a memory 2504, which may itself include one or more memory devices such as volatile memory (e.g., dynamic random access memory (DRAM), static random-access memory (SRAM)), non-volatile memory (e.g., read-only memory (ROM), flash memory, chalcogenide-based phase-change non-voltage memories), solid state memory, and/or a hard drive. In some embodiments, the memory 2504 may include memory that is located on the same integrated circuit die as the processor unit 2502. This memory may be used as cache memory (e.g., Level 1 (L1), Level 2 (L2), Level 3 (L3), Level 4 (L4), Last Level Cache (LLC)) and may include embedded dynamic random access memory (eDRAM) or spin transfer torque magnetic random access memory (STT-MRAM).

In some embodiments, the electrical device 2500 can comprise one or more processor units 2502 that are heterogeneous or asymmetric to another processor unit 2502 in the electrical device 2500. There can be a variety of differences between the processing units 2502 in a system in terms of a spectrum of metrics of merit including architectural, microarchitectural, thermal, power consumption characteristics, and the like. These differences can effectively manifest themselves as asymmetry and heterogeneity among the processor units 2502 in the electrical device 2500.

In some embodiments, the electrical device 2500 may include a communication component 2512 (e.g., one or more communication components). For example, the communication component 2512 can manage wireless communications for the transfer of data to and from the electrical device 2500. The term "wireless" and its derivatives may be used to describe circuits, devices, systems, methods, techniques, communications channels, etc., that may communicate data through the use of modulated electromagnetic radiation through a nonsolid medium. The term "wireless" does not imply that the associated devices do not contain any wires, although in some embodiments they might not.

The communication component 2512 may implement any of a number of wireless standards or protocols, including but not limited to Institute for Electrical and Electronic Engineers (IEEE) standards including Wi-Fi (IEEE 802.11 family), IEEE 802.16 standards (e.g., IEEE 802.16-2005 Amendment), Long-Term Evolution (LTE) project along with any amendments, updates, and/or revisions (e.g., advanced LTE project, ultra mobile broadband (UMB) project (also referred to as "3GPP2"), etc.). IEEE 802.16 compatible Broadband Wireless Access (BWA) networks are generally referred to as WiMAX networks, an acronym that stands for Worldwide Interoperability for Microwave Access, which is a certification mark for products that pass conformity and interoperability tests for the IEEE 802.16 standards. The communication component 2512 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication component 2512 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication component 2512 may operate in accordance with Code Division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication component 2512 may operate in accordance with other wireless protocols in other embodiments. The electrical device 2500 may include an antenna 2522 to facilitate wireless communications and/or to receive other wireless communications (such as AM or FM radio transmissions).

In some embodiments, the communication component 2512 may manage wired communications, such as electrical, optical, or any other suitable communication protocols (e.g., IEEE 802.3 Ethernet standards). As noted above, the communication component 2512 may include multiple communication components. For instance, a first communication component 2512 may be dedicated to shorter-range wireless communications such as Wi-Fi or Bluetooth, and a second communication component 2512 may be dedicated to longer-range wireless communications such as global positioning system (GPS), EDGE, GPRS, CDMA, WiMAX, LTE, EV-DO, or others. In some embodiments, a first communication component 2512 may be dedicated to wireless communications, and a second communication component 2512 may be dedicated to wired communications.

The electrical device 2500 may include battery/power circuitry 2514. The battery/power circuitry 2514 may include one or more energy storage devices (e.g., batteries or capacitors) and/or circuitry for coupling components of the electrical device 2500 to an energy source separate from the electrical device 2500 (e.g., AC line power).

The electrical device 2500 may include a display device 2506 (or corresponding interface circuitry, as discussed above). The display device 2506 may include one or more embedded or wired or wirelessly connected external visual indicators, such as a heads-up display, a computer monitor, a projector, a touchscreen display, a liquid crystal display (LCD), a light-emitting diode display, or a flat panel display.

The electrical device 2500 may include an audio output device 2508 (or corresponding interface circuitry, as discussed above). The audio output device 2508 may include any embedded or wired or wirelessly connected external device that generates an audible indicator, such as speakers, headsets, or earbuds.

The electrical device 2500 may include an audio input device 2524 (or corresponding interface circuitry, as discussed above). The audio input device 2524 may include any embedded or wired or wirelessly connected device that generates a signal representative of a sound, such as microphones, microphone arrays, or digital instruments (e.g., instruments having a musical instrument digital interface (MIDI) output). The electrical device 2500 may include a Global Navigation Satellite System (GNSS) device 2518 (or corresponding interface circuitry, as discussed above), such as a Global Positioning System (GPS) device. The GNSS device 2518 may be in communication with a satellite-based system and may determine a geolocation of the electrical device 2500 based on information received from one or more GNSS satellites, as known in the art.

The electrical device 2500 may include an other output device 2510 (or corresponding interface circuitry, as discussed above). Examples of the other output device 2510 may include an audio codec, a video codec, a printer, a wired or wireless transmitter for providing information to other devices, or an additional storage device.

The electrical device 2500 may include an other input device 2520 (or corresponding interface circuitry, as discussed above). Examples of the other input device 2520 may include an accelerometer, a gyroscope, a compass, an image capture device (e.g., monoscopic or stereoscopic camera), a trackball, a trackpad, a touchpad, a keyboard, a cursor control device such as a mouse, a stylus, a touchscreen, proximity sensor, microphone, a bar code reader, a Quick Response (QR) code reader, electrocardiogram (ECG) sensor, PPG (photoplethysmogram) sensor, galvanic skin response sensor, any other sensor, or a radio frequency identification (RFID) reader.

The electrical device 2500 may have any desired form factor, such as a hand-held or mobile electrical device (e.g., a cell phone, a smart phone, a mobile internet device, a music player, a tablet computer, a laptop computer, a 2-in-1 convertible computer, a portable all-in-one computer, a netbook computer, an ultrabook computer, a personal digital assistant (PDA), an ultra mobile personal computer, a portable gaming console, etc.), a desktop electrical device, a server, a rack-level computing solution (e.g., blade, tray or sled computing systems), a workstation or other networked computing component, a printer, a scanner, a monitor, a set-top box, an entertainment control unit, a stationary gaming console, smart television, a vehicle control unit, a digital camera, a digital video recorder, a wearable electrical device or an embedded computing system (e.g., computing systems that are part of a vehicle, smart home appliance, consumer electronics product or equipment, manufacturing equipment). In some embodiments, the electrical device 2500 may be any other electronic device that processes data. In some embodiments, the electrical device 2500 may comprise multiple discrete physical components. Given the range of devices that the electrical device 2500 can be manifested as in various embodiments, in some embodiments, the electrical device 2500 can be referred to as a computing device or a computing system.

### EXAMPLES

Illustrative examples of the technologies disclosed herein are provided below. An embodiment of the technologies may include any one or more, and any combination of, the examples described below.

Example 1 includes an apparatus comprising a photonic integrated circuit (PIC) die, wherein one or more waveguides are defined in the PIC die; a reflective component comprising a reflective surface, wherein the reflective component is configured to reflect light from the one or more waveguides off of the reflective surface; and a lens array comprising one or more optical focusing elements configured to focus the light reflected off of the reflective surface into one or more collimated beams, wherein the lens array is fixed in place relative to the PIC die.

Example 2 includes the subject matter of Example 1, and wherein the one or more waveguides extend to a side surface of the PIC die, wherein the reflective surface extends below a plane defined by a top surface of the PIC die.

Example 3 includes the subject matter of any of Examples 1 and 2, and wherein the lens array comprises the reflective component.

Example 4 includes the subject matter of any of Examples 1-3, and wherein the PIC die comprises the reflective component.

Example 5 includes the subject matter of any of Examples 1-4, and wherein the reflective component is not part of the lens array or the PIC die.

Example 6 includes the subject matter of any of Examples 1-5, and wherein the one or more optical focusing elements comprise one or more lenses.

Example 7 includes the subject matter of any of Examples 1-6, and wherein the PIC die comprises a top surface, wherein the one or more waveguides are defined in a plane parallel to the top surface of the PIC die, wherein the reflective surface is oriented 45° +/- 1° relative to the plane parallel to the top surface.

Example 8 includes the subject matter of any of Examples 1-7, and wherein the PIC die comprises a top surface, wherein the one or more waveguides are defined in a plane parallel to the top surface of the PIC die, wherein the reflective surface is oriented such that the one or more collimated beams are oriented at an angle between 20° and 70° relative to the plane parallel to the top surface.

Example 9 includes the subject matter of any of Examples 1-8, and wherein the reflective surface is to reflect the light from the one or more waveguides using total internal reflection.

Example 10 includes the subject matter of any of Examples 1-9, and wherein the reflective component comprises a second reflective surface, wherein the second reflective surface is to reflect the light from the reflective surface towards the one or more optical focusing elements.

Example 11 includes the subject matter of any of Examples 1-10, and wherein the lens array comprises the reflective component, wherein the lens array is supported by a top surface of the PIC die.

Example 12 includes the subject matter of any of Examples 1-11, and wherein the lens array comprises the reflective component, wherein the one or more waveguides extend to a side surface of the PIC die, wherein the reflective surface extends below a plane defined by a top surface of the PIC die, wherein the lens array is supported by an extension platform of the PIC die that extends past the side surface.

Example 13 includes the subject matter of any of Examples 1-12, and further including a circuit board, wherein the PIC is mated to the circuit board; and one or more electrical integrated circuits mated to the circuit board.

Example 14 includes a compute device comprising the apparatus of any of Examples 1-13, the compute device further comprising a processor communicatively coupled to the apparatus; and a memory communicatively coupled to the processor and the apparatus.

Example 15 includes an apparatus comprising a photonic integrated circuit (PIC) die, wherein one or more waveguides are defined in the PIC die, wherein the PIC die comprises a top surface, wherein the one or more waveguides are defined in a plane parallel to the top surface of the PIC die, wherein the one or more waveguides extend to a side surface of the PIC die; and a reflective component comprising a reflective surface, wherein the reflective component is configured to reflect light off of the reflective surface, wherein the light is from the side surface of the PIC die from the one or more waveguides, wherein the reflective surface is oriented such that the reflective surface is at an angle between 10° and 40 relative to the plane parallel to the top surface.

Example 16 includes the subject matter of Example 15, and further including a lens array comprising one or more optical focusing elements configured to focus the light that is from the one or more waveguides and reflected off of the reflective surface into one or more collimated beams, wherein the lens array is fixed in place relative to the PIC die.

Example 17 includes the subject matter of any of Examples 15 and 16, and wherein the lens array comprises the reflective component.

Example 18 includes the subject matter of any of Examples 15-17, and wherein the reflective component is not part of the lens array or the PIC die.

Example 19 includes the subject matter of any of Examples 15-18, and wherein the one or more optical focusing elements comprise one or more lenses.

Example 20 includes the subject matter of any of Examples 15-19, and wherein the reflective surface extends below a plane defined by the top surface of the PIC die.

Example 21 includes the subject matter of any of Examples 15-20, and wherein the PIC die comprises the reflective component.

Example 22 includes the subject matter of any of Examples 15-21, and wherein the reflective surface is to reflect the light from the one or more waveguides using total internal reflection.

Example 23 includes the subject matter of any of Examples 15-22, and further including a circuit board, wherein the PIC is mated to the circuit board; and one or more electrical integrated circuits mated to the circuit board.

Example 24 includes a compute device comprising the apparatus of any of Examples 15-23, the compute device further comprising a processor communicatively coupled to the apparatus; and a memory communicatively coupled to the processor and the apparatus.

Example 25 includes an apparatus comprising a photonic integrated circuit (PIC) die, wherein one or more waveguides are defined in the PIC die, wherein the PIC die comprises a top surface, wherein the one or more waveguides are defined in a plane parallel to the top surface of the PIC die, wherein the one or more waveguides extend to a side surface of the PIC die; and a reflective component comprising a first reflective surface; and a second reflective surface, wherein the reflective component is configured to reflect light off of the first reflective surface towards the second reflective surface and off of the second reflective surface towards one or more lenses of a lens array, wherein the light is from the side surface of the PIC die from the one or more waveguides.

Example 26 includes the subject matter of Example 25, and wherein the lens array comprises the reflective component, wherein the lens array is supported by the top surface of the PIC die.

Example 27 includes the subject matter of any of Examples 25 and 26, and wherein the lens array comprises the reflective component, wherein the first reflective surface extends below a plane defined by the top surface of the PIC die, wherein the lens array is supported by an extension platform of the PIC die that extends past the side surface.

Example 28 includes the subject matter of any of Examples 25-27, and further including the lens array, the lens array comprising the one or more lenses, the one or more lenses configured to focus the light that is from the one or more waveguides and reflected off of the first reflective surface and the second reflective surface into one or more collimated beams, wherein the lens array is fixed in place relative to the PIC die.

Example 29 includes the subject matter of any of Examples 25-28, and wherein the lens array comprises the reflective component.

Example 30 includes the subject matter of any of Examples 25-29, and wherein the reflective component is not part of the lens array or the PIC die.

Example 31 includes the subject matter of any of Examples 25-30, and wherein the first reflective surface extends below a plane defined by the top surface of the PIC die.

Example 32 includes the subject matter of any of Examples 25-31, and wherein the PIC die comprises the reflective component.

Example 33 includes the subject matter of any of Examples 25-32, and wherein the first reflective surface is to reflect the light from the one or more waveguides using total internal reflection.

Example 34 includes the subject matter of any of Examples 25-33, and further including a circuit board, wherein the PIC is mated to the circuit board; and one or more electrical integrated circuits mated to the circuit board.

Example 35 includes a compute device comprising the apparatus of any of Examples 25-34, wherein the compute device further comprising a processor communicatively coupled to the apparatus; and a memory communicatively coupled to the processor and the apparatus.

## Claims

1. An apparatus comprising:
a photonic integrated circuit (PIC) die, wherein one or more waveguides are defined in the PIC die;
a reflective component comprising a reflective surface, wherein the reflective component is configured to reflect light from the one or more waveguides off of the reflective surface; and
a lens array comprising one or more optical focusing elements configured to focus the light reflected off of the reflective surface into one or more collimated beams, wherein the lens array is fixed in place relative to the PIC die.

2. The apparatus of claim 1, wherein the one or more waveguides extend to a side surface of the PIC die,
wherein the reflective surface extends below a plane defined by a top surface of the PIC die.

3. The apparatus of claim 1, wherein the lens array comprises the reflective component.

4. The apparatus of claim 1, wherein the PIC die comprises the reflective component.

5. The apparatus of claim 1, wherein the reflective component is not part of the lens array or the PIC die.

6. The apparatus of claim 1, wherein the one or more optical focusing elements comprise one or more lenses.

7. The apparatus of claim 1, wherein the PIC die comprises a top surface, wherein the one or more waveguides are defined in a plane parallel to the top surface of the PIC die, wherein the reflective surface is oriented 45° +/- 1° relative to the plane parallel to the top surface.

8. The apparatus of claim 1, wherein the PIC die comprises a top surface, wherein the one or more waveguides are defined in a plane parallel to the top surface of the PIC die, wherein the reflective surface is oriented such that the one or more collimated beams are oriented at an angle between 20° and 70° relative to the plane parallel to the top surface.

9. The apparatus of claim 1, wherein the reflective surface is to reflect the light from the one or more waveguides using total internal reflection.

10. The apparatus of claim 1, wherein the reflective component comprises a second reflective surface, wherein the second reflective surface is to reflect the light from the reflective surface towards the one or more optical focusing elements.

11. The apparatus of claim 10, wherein the lens array comprises the reflective component, wherein the lens array is supported by a top surface of the PIC die.

12. The apparatus of claim 10, wherein the lens array comprises the reflective component,
wherein the one or more waveguides extend to a side surface of the PIC die,
wherein the reflective surface extends below a plane defined by a top surface of the PIC die,
wherein the lens array is supported by an extension platform of the PIC die that extends past the side surface.

13. The apparatus of claim 1, further comprising:
a circuit board, wherein the PIC is mated to the circuit board; and
one or more electrical integrated circuits mated to the circuit board.

14. A compute device comprising the apparatus of claim 1, the compute device further comprising:
a processor communicatively coupled to the apparatus; and
a memory communicatively coupled to the processor and the apparatus.
